# EUROPEAN PATENT APPLICATION

(11) **EP 4 564 997 A1**
(43) Date of publication of application: **04.06.2025**
(21) Application number: 23851310.5
(22) Date of filing: 19.05.2023
(51) Int. Cl.: H04W 76/27, H04W 68/00, H04W 36/08, H04W 76/19, H04W 8/14

(54) **WIRELESS COMMUNICATION METHOD, COMMUNICATION APPARATUS AND COMMUNICATION SYSTEM**

(30) Priority: 09.08.2022 CN 202210952890
(71) Applicant: Huawei Technologies Co., Ltd., Shenzhen, Guangdong 518129 (CN)
(72) Inventor: SHA, Tong, Shenzhen, Guangdong 518129 (CN); LI, Bingzhao, Shenzhen, Guangdong 518129 (CN); ZHANG, Haisen, Shenzhen, Guangdong 518129 (CN); CHANG, Junren, Shenzhen, Guangdong 518129 (CN)
(74) Representative: Gill Jennings & Every LLP
(86) International application number: PCT/CN2023/095400
(87) International publication number: WO 2024/032080

(57) **Abstract**

This application provides a wireless communication method, a communication apparatus, and a communication system. In the method, after a first terminal device receives a paging message, if the first terminal device is currently in a process of small data transmission, the first terminal device does not need to send an RRC resume request message to a network side again, but may wait for a network side device to send an RRC resume message. Therefore, unnecessary power consumption overheads can be reduced, processing complexity of the terminal device can be reduced, and signaling overheads can be reduced.

## Description

### CROSS-REFERENCE TO RELATED APPLICATIONS

This application claims priority to Chinese Patent Application No. 202210952890.0, filed with the China National Intellectual Property Administration on August 9, 2022 and entitled "WIRELESS COMMUNICATION METHOD, COMMUNICATION APPARATUS, AND COMMUNICATION SYSTEM", which is incorporated herein by reference in its entirety.

### TECHNICAL FIELD

This application relates to the field of communication technologies, and in particular, to a wireless communication method, a communication apparatus, and a communication system.

### BACKGROUND

Currently, a terminal device has three radio resource control (radio resource control, RRC) statuses: an RRC connected (RRC_connected) state, an RRC idle (RRC _idle) state, and an RRC inactive (RRC_inactive) state.

For a terminal device in the RRC inactive state, to avoid an increase in power consumption of the terminal device caused by entering the RRC connected state under low service traffic, when an amount of data to be transmitted by the terminal device in the RRC inactive state is less than a preset threshold, the terminal device may not enter the RRC connected state, but perform data and/or signaling transmission with a radio access network device in the RRC inactive state. This process is referred to as small data transmission.

Multicast communication means that a same service and same data are provided to a group of specific terminal devices. Usually, a network side may send a multicast service to a terminal device in the RRC connected state through a multicast session. When the network side does not need to send data of a multicast session to the terminal device, the network side may enable the terminal device to enter the RRC idle state or the RRC inactive state, to reduce power consumption of the terminal device. When a multicast session is activated or data of the multicast session arrives, the network side notifies, by using a group notification mechanism, the terminal device in the RRC idle state or the RRC inactive state. After receiving a group notification, the terminal device may set up a connection to the network side again, to receive the data of the multicast session. Once the terminal device leaves the multicast session, the terminal device may stop monitoring a group notification related to the multicast session.

In a scenario, after a multicast session is activated, the network side pages a terminal device that joins the multicast session and that is in the RRC inactive state. In this case, the terminal device may be in a process of small data transmission, or may not be in a process of small data transmission. In this case, a specific operation that the terminal device needs to perform needs to be resolved.

### SUMMARY

Embodiments of this application provide a wireless communication method, a communication apparatus, and a communication system, to ensure that in a process of small data transmission of a terminal device, unnecessary power consumption overheads are reduced, processing complexity of the terminal device is reduced, and signaling overheads are reduced.

According to a first aspect, an embodiment of this application provides a wireless communication method. The method may be performed by a first terminal device or a module (for example, a chip) used in the first terminal device. The method includes: The first terminal device receives a paging message, where the paging message includes identification information of at least one multicast session, and the first terminal device is in an RRC inactive state. When a first condition is met, the first terminal device triggers an RRC connection resume procedure. The first condition includes: the at least one multicast session includes a multicast session that the first terminal device joins, and the first terminal device is not in a process of small data transmission. Alternatively, the first condition includes: the paging message further includes identification information of at least one terminal device, the at least one multicast session includes a multicast session that the first terminal device joins, the terminal device is not in a process of small data transmission, and the identification information of the at least one terminal device does not include identification information of the first terminal device. The small data transmission is data and/or signaling transmission that is performed by the first terminal device in the RRC inactive state and in which a data volume is less than a preset threshold.

In the foregoing solution, if the at least one multicast session in the paging message sent by a network side includes the multicast session that the first terminal device joins, it indicates that the network side needs to send data of the multicast session to the first terminal device, and the first terminal device may request the network side to resume an RRC connection to receive the data of the multicast session. However, if the first terminal device is currently in the process of small data transmission after receiving the paging message, it indicates that the first terminal device has sent an RRC resume request message to the network side before receiving the paging message, there is an available data/signaling transmission path between a radio access network device and the first terminal device, and the radio access network device has known a cell on which the first terminal device camps. Therefore, if the network side needs to enable the first terminal device to enter an RRC connected state to receive the multicast session, the network side may send an RRC resume message to the first terminal device on the transmission path. Therefore, if the first terminal device is currently in the process of small data transmission after receiving the paging message, the first terminal device does not need to send the RRC resume request message to the network side again, but may wait for a network side device to send the RRC resume message. The RRC resume message may be in response to an RRC resume request message sent by the first terminal device when the first terminal device triggers small data transmission. Therefore, unnecessary power consumption overheads can be reduced, processing complexity of the terminal device can be reduced, and signaling overheads can be reduced.

In a possible implementation method, that the first terminal device triggers an RRC connection resume procedure includes: The first terminal device sends an RRC resume request message to a radio access network device.

In a possible implementation method, when a second condition is met, the first terminal device determines not to trigger the RRC connection resume procedure. The second condition includes: the at least one multicast session includes the multicast session that the first terminal device joins, and the first terminal device is in the process of small data transmission.

In the foregoing solution, when the first terminal device is performing small data transmission, it indicates that the first terminal device has sent the RRC resume request message to the radio access network device, there is an available data/signaling transmission path between the radio access network device and the first terminal device, and the radio access network device has known the cell on which the first terminal device camps. Therefore, after receiving the paging message used to notify that the multicast session is activated, the first terminal device may not need to trigger the RRC connection resume procedure again, but wait for the radio access network device to send the RRC resume message to the first terminal device to enable the first terminal device to enter the RRC connected state. Therefore, the unnecessary power consumption overheads can be reduced, the processing complexity of the terminal device can be reduced, and the signaling overheads can be reduced.

In a possible implementation method, the first terminal device sends indication information to the radio access network device, where the indication information indicates that data and/or signaling arrive/arrives on a radio bearer for non-small data transmission, the at least one multicast session includes the multicast session that the first terminal device joins, or the multicast session that the first terminal device joins has been activated.

In the foregoing solution, based on the indication information sent by the first terminal device, the radio access network device may learn that the first terminal device has data or signaling arriving on the radio bearer for non-small data transmission, or learn that the first terminal device expects to enter the RRC connected state to receive the multicast session. This helps the radio access network device determine whether to enable the first terminal device to resume the RRC connected state, and facilitates subsequent correct communication between the radio access network device and the first terminal device. For example, after receiving the paging message, if the first terminal device does not expect to enter the RRC connected state to receive the multicast session indicated in the paging message, or has released the multicast session, the first terminal device may not send the indication information to the radio access network device, and the radio access network device does not need to enable the first terminal device to enter the RRC connected state.

In a possible implementation method, when a third condition is met, the first terminal device enters an RRC idle state, and triggers an RRC connection setup procedure. The third condition includes: the paging message further includes the identification information of the at least one terminal device, the at least one multicast session includes the multicast session that the first terminal device joins, the terminal device is not in the process of small data transmission, and the identification information of the at least one terminal device includes the identification information of the first terminal device.

According to a second aspect, an embodiment of this application provides a wireless communication method. The method may be performed by a terminal device or a module (for example, a chip) used in the terminal device. The method includes: The terminal device determines, based on a status of small data transmission, whether to monitor a paging message used for group notification, where the terminal device is in an RRC inactive state, and the paging message includes identification information of at least one multicast session. The terminal device joins one or more multicast sessions, and the small data transmission is data and/or signaling transmission that is performed by the first terminal device in the RRC inactive state and in which a data volume is less than a preset threshold.

In the foregoing solution, the terminal device determines, based on the status of small data transmission, to monitor the paging message used for group notification or not monitor the paging message used for group notification, instead of always monitoring the paging message used for group notification. This helps reduce unnecessary power consumption overheads, reduce processing complexity of the terminal device, and reduce signaling overheads.

In a possible implementation method, that the terminal device determines, based on a status of small data transmission, whether to monitor a paging message used for group notification includes: The terminal device monitors the paging message when the terminal device is not performing small data transmission.

In the foregoing solution, when the terminal device in the RRC inactive state does not perform small data transmission, it indicates that a radio access network device does not know a cell on which the terminal device camps, and there is no available data/signaling path between the terminal device and the radio access network device. Therefore, the terminal device needs to determine, in time through paging monitoring, whether a network side sends a paging message used to notify an activated multicast session, to ensure that data of the multicast session can be received in time.

In a possible implementation method, that the terminal device determines, based on a status of small data transmission, whether to monitor a paging message used for group notification includes: The terminal device does not monitor the paging message when the terminal device is performing small data transmission.

In the foregoing solution, if the terminal device is currently in a process of small data transmission, it indicates that a radio access network device has known a cell on which the terminal device camps, there is an available data/signaling path between the terminal device and the radio access network device, and the terminal device has sent an RRC resume request message to a network side. Therefore, if the network side needs to enable the terminal device to enter an RRC connected state to receive a multicast session, the network side may send an RRC resume message to the terminal device. Therefore, the terminal device does not need to monitor a paging message used to notify that the multicast session has been activated, and does not need to decode a data block on a physical downlink shared channel (physical downlink shared channel, PDSCH) that carries the paging message. In this way, the unnecessary power consumption overheads can be reduced, the processing complexity of the terminal device can be reduced, and the signaling overheads can be reduced.

In a possible implementation method, that the terminal device does not monitor the paging message when the terminal device is performing small data transmission includes: The terminal device does not monitor the paging message when the terminal device is performing small data transmission, and the terminal device does not support receiving of a multicast session in the RRC inactive state.

In this solution, if the terminal device is currently in the process of small data transmission, it indicates that the radio access network device has known the cell on which the terminal device camps, there is the available data/signaling path between the terminal device and the radio access network device, and the terminal device has sent the RRC resume request message to the network side. Therefore, if the network side needs to enable the terminal device to enter the RRC connected state to receive the multicast session, the network side may send the RRC resume message to the terminal device. In addition, because the terminal device does not support receiving of a multicast session in the RRC inactive state, the terminal device needs to enter the RRC connected state to receive data of the multicast session. Therefore, the terminal device may not monitor the paging message used to notify that the multicast session has been activated, and does not need to decode the data block on the PDSCH that carries the paging message, but waits for the network side to actively indicate the terminal device to enter the RRC connected state. Therefore, this solution can reduce the unnecessary power consumption overheads, reduce the processing complexity of the terminal device, and reduce the signaling overheads.

In a possible implementation method, the terminal device receives an RRC message, where the RRC message includes the identification information of the at least one multicast session, and the RRC message is used to notify that the at least one multicast session has been activated. When the at least one multicast session includes the multicast session that the terminal device joins, the terminal device receives, in the RRC inactive state, the multicast session that the terminal device joins. Optionally, the RRC message further indicates the terminal device to remain in the RRC inactive state to receive the multicast session.

The paging message used for group notification is a broadcast message, and the paging message is sent on an initial (initial) bandwidth part (bandwidth part, BWP). If a sum of a bandwidth range of a BWP in which the terminal device is currently performing small data transmission and a bandwidth range of the initial BWP exceeds a bandwidth supported by the terminal device (for example, the terminal device is a low-capability terminal device), the terminal device cannot simultaneously perform small data transmission and paging message receiving. If the terminal device needs to receive group paging in the process of small data transmission, the terminal device needs to switch a BWP to the initial BWP to receive the group paging. This causes a data packet loss in the process of small data transmission. However, in the foregoing solution, the terminal device may receive, in the BWP of small data transmission by using dedicated signaling (that is, the RRC message), a notification used to notify that the multicast session has been activated, and that the multicast session has been activated is not notified by using the paging message. Therefore, BWP switching does not need to be performed, the packet loss can be avoided, and implementation complexity of the terminal device can be reduced.

In a possible implementation method, that the terminal device determines, based on a status of small data transmission, whether to monitor a paging message used for group notification includes: The terminal device monitors the paging message when the terminal device is performing small data transmission, and the terminal device supports receiving of a multicast session in the RRC inactive state.

If the terminal device is currently in a process of small data transmission, it indicates that a radio access network device has known a cell on which the terminal device camps, there is an available data/signaling path between the terminal device and the radio access network device, and the terminal device has sent an RRC resume request message to a network side. Therefore, if the network side needs to enable the terminal device to enter an RRC connected state to receive a multicast session, the network side may send an RRC resume message to the terminal device, to trigger the terminal device to enter the RRC connected state to receive the multicast session. Therefore, usually, the terminal device may not need to monitor a paging message used to notify that the multicast session has been activated, but only needs to wait for the RRC resume message sent by the radio access network device. However, in this solution, if the terminal device is performing small data transmission, and the terminal device supports receiving of a multicast session in the RRC inactive state, the terminal device needs to monitor the paging message. A reason is as follows: Because the terminal device supports receiving of a multicast session in the RRC inactive state, the radio access network device may not send the RRC resume message to the terminal device to trigger the terminal device to enter the RRC connected state and receive data of the multicast session in the RRC connected state. Therefore, the terminal device needs to actively monitor the paging message to learn whether the multicast session has been activated, to avoid missing the data that is of the multicast session and that is delivered by a network. When the terminal device detects that the multicast session has been activated, the terminal device may receive the data of the multicast session in the RRC inactive state.

In a possible implementation method, that the terminal device monitors the paging message when the terminal device is performing small data transmission, and the terminal device supports receiving of a multicast session in the RRC inactive state includes: The terminal device monitors the paging message when the terminal device is performing small data transmission, the terminal device supports receiving of a multicast session in the RRC inactive state, and a cell on which the terminal device camps supports providing a multicast session for a terminal device in the inactive state.

In the foregoing solution, it needs to be ensured that when the cell on which the terminal device camps supports providing a multicast session for a terminal device in the inactive state, the terminal device monitors the paging message, to prevent the terminal device from performing invalid monitoring, and help reduce the unnecessary power consumption overheads.

According to a third aspect, an embodiment of this application provides a wireless communication method. The method may be performed by a terminal device or a module (for example, a chip) used in the terminal device. The method includes: The terminal device receives a first message, where the first message includes identification information of at least one multicast session, and the terminal device is in an RRC inactive state. When the at least one multicast session includes a multicast session that the terminal device joins, and the terminal device is in a process of small data transmission, the terminal device enters an RRC idle state, and triggers an RRC connection setup procedure. The small data transmission is data and/or signaling transmission that is performed by the terminal device in the RRC inactive state and in which a data volume is less than a preset threshold.

In the foregoing solution, if the at least one multicast session in the first message sent by a network side includes the multicast session that the terminal device joins, it indicates that the network side needs to send data of the multicast session to the terminal device, and the terminal device may request the network side to resume an RRC connection to receive the data of the multicast session. However, if the terminal device is currently in the process of small data transmission after receiving a paging message, it indicates that a radio access network device has known a cell on which the terminal device camps, there is an available data/signaling path between the terminal device and the radio access network device, and the terminal device has sent an RRC resume request message to the network side before receiving the paging message. Therefore, if the network side needs to enable the terminal device to enter an RRC connected state to receive the multicast session, the network side may send an RRC resume message to the terminal device. Therefore, if the terminal device is currently in the process of small data transmission after receiving the paging message, the terminal device does not need to send the RRC resume request message to the network side again, but can directly enter the RRC idle state and trigger the RRC connection setup procedure, so that the terminal device can quickly enter the RRC connected state and receive the data of the multicast session, unnecessary power consumption overheads can be reduced, processing complexity of the terminal device can be reduced, and signaling overheads can be reduced.

In a possible implementation method, the first message is an RRC message or a paging message.

According to a fourth aspect, an embodiment of this application provides a wireless communication method. The method may be performed by a first radio access network device or a module (for example, a chip) used in the first radio access network device. The method includes: The first radio access network device sends a second paging message, where the second paging message indicates that at least one multicast session is activated. The first radio access network device receives indication information from a first terminal device, where the indication information includes a non-small data transmission data indication and/or a multicast cause value, the at least one multicast session includes a multicast session that the first terminal device joins, the first terminal device is in a radio resource control RRC inactive state and is in a process of small data transmission, and the first radio access network device is a serving radio access network device of the first terminal device.

In the foregoing solution, based on the indication information sent by the first terminal device, the first radio access network device may learn that the first terminal device has data arriving on a radio bearer for non-small data transmission, or learn that the first terminal device expects to enter an RRC connected state to receive the multicast session. This helps the first radio access network device determine whether to enable the first terminal device to resume the RRC connected state, and facilitates subsequent correct communication between the first radio access network device and the first terminal device, for example, multicast session receiving by the first terminal device in the RRC connected state.

In a possible implementation method, after the first radio access network device receives the indication information from the first terminal device, the method further includes: The first radio access network device sends an RRC resume message to the first terminal device, where the RRC resume message is used to resume an RRC connection of the first terminal device.

In a possible implementation method, before the first radio access network device sends the RRC resume message to the first terminal device, the method further includes: The first radio access network device sends an RRC release message to the first terminal device, where the RRC release message indicates the first terminal device to enter the RRC inactive state or an RRC idle state. The first radio access network device receives an RRC resume request message from the first terminal device, where the RRC resume request message is used to request to enter an RRC connected state. Alternatively, the first radio access network device receives an RRC setup request message from the first terminal device, where the RRC setup request message is used to request to set up an RRC connection.

In a possible implementation method, the second paging message further indicates a terminal device in the RRC connected state to receive the at least one multicast session. Alternatively, the second paging message further indicates that the at least one multicast session is a multicast session received by a terminal device in the RRC connected state or an RRC non-connected state.

In a possible implementation method, before the first radio access network device sends the second paging message, the method further includes: The first radio access network device receives a first paging message, where the first paging message is used to notify that one or more multicast sessions are activated. The second paging message is determined based on the first paging message.

In a possible implementation method, that the first radio access network device receives a first paging message includes: The first radio access network device receives the first paging message from a second radio access network device or a core network device, where the second radio access network device is a last serving radio access network device of the first terminal device in the RRC connected state.

In a possible implementation method, the first paging message further includes information used to page a terminal device. That the first radio access network device sends a second paging message includes: The first radio access network device sends the second paging message based on the information used to page the terminal device.

In a possible implementation method, the multicast cause value indicates that the at least one multicast session includes the multicast session that the first terminal device joins, or indicates that the multicast session that the first terminal device joins is activated, or indicates that the first terminal device enters the RRC connected state to receive multicast.

In a possible implementation method, after the first radio access network device receives the indication information from the first terminal device, the method further includes: The first radio access network device sends a context request message to the second radio access network device, where the context request message is used to request a terminal device context of the first terminal device, and the second radio access network device is the last serving radio access network device of the first terminal device in the RRC connected state. The first radio access network device receives the terminal device context of the first terminal device from the second radio access network device.

According to a fifth aspect, an embodiment of this application provides a wireless communication method. The method may be performed by a first radio access network device or a module (for example, a chip) used in the first radio access network device. The method includes: The first radio access network device receives a first paging message, where the first paging message includes identifiers of one or more multicast sessions, the first paging message is used to notify that the one or more multicast sessions are activated, the first radio access network device is a serving radio access network device of a first terminal device, and the first terminal device is in a radio resource control RRC inactive state and is in a process of small data transmission. The first radio access network device obtains a multicast-related context of the first terminal device, where the multicast-related context includes an identifier of a multicast session that the first terminal device joins. The first radio access network device sends an RRC resume message to the first terminal device, where the identifiers of the one or more multicast sessions include the identifier of the multicast session that the first terminal device joins, and the RRC resume message is used to resume an RRC connection of the first terminal device.

In the foregoing solution, if the first radio access network device learns that the activated multicast session includes the multicast session that the first terminal device joins, the first radio access network device resumes the RRC connection of the first terminal device by using the RRC resume message, that is, the terminal device is resumed to an RRC connected state, to facilitate subsequent correct communication between the first radio access network device and the first terminal device, for example, multicast session receiving by the first terminal device in the RRC connected state.

In a possible implementation method, before the first radio access network device sends the RRC resume message to the first terminal device, the method further includes: determining a second paging message based on the first paging message, where the second paging message indicates that at least one multicast session is activated, and the at least one multicast session includes the multicast session that the first terminal device joins; and sending the second paging message.

In a possible implementation method, before the first radio access network device sends the RRC resume message to the first terminal device, the method further includes: The first radio access network device sends an RRC release message to the first terminal device, where the RRC release message indicates the first terminal device to enter the RRC inactive state or an RRC idle state. The first radio access network device receives an RRC resume request message from the first terminal device, where the RRC resume request message is used to request to enter an RRC connected state. Alternatively, the first radio access network device receives an RRC setup request message from the first terminal device, where the RRC setup request message is used to request to set up an RRC connection.

In a possible implementation method, that the first radio access network device receives a first paging message includes: The first radio access network device receives the first paging message from a second radio access network device or a core network device, where the second radio access network device is a last serving radio access network device of the first terminal device in the RRC connected state.

In a possible implementation method, that the first radio access network device obtains a multicast-related context of the first terminal device includes: The first radio access network device sends a first context request message to the second radio access network device, where the first context request message is used to request to obtain a context of the first terminal device to perform small data transmission. The first radio access network device receives a partial context of the first terminal device from the second radio access network device, where the partial context of the first terminal device includes a small data transmission-related context and the multicast-related context, and the second radio access network device is the last serving radio access network device of the first terminal device in the RRC connected state.

In a possible implementation method, the method further includes: The first radio access network device sends a second context request message to the second radio access network device, where the second context request message is used to request to obtain a context of the first terminal device. The first radio access network device receives a terminal device context of the first terminal device from the second radio access network device.

In a possible implementation method, that the first radio access network device obtains a multicast-related context of the first terminal device includes: The first radio access network device receives a terminal device context of the first terminal device from the second radio access network device, where the terminal device context includes the multicast-related context, and the second radio access network device is the last serving radio access network device of the first terminal device in the RRC connected state.

According to a sixth aspect, an embodiment of this application provides a wireless communication method. The method may be performed by a second radio access network device or a module (for example, a chip) used in the second radio access network device. The method includes: The second radio access network device determines whether identifiers of one or more activated multicast sessions include an identifier of a multicast session that a first terminal device joins. When the identifiers of the one or more activated multicast sessions include the identifier of the multicast session that the first terminal device joins, the second radio access network device sends a terminal device context of the first terminal device to a first radio access network device. The first terminal device is in a radio resource control RRC inactive state and is in a process of small data transmission, the first radio access network device is a serving radio access network device of the first terminal device, and the second radio access network device is a last serving radio access network device of the first terminal device in an RRC connected state.

In the foregoing solution, when learning that the activated multicast session includes the multicast session that the first terminal device joins, the second radio access network device sends the context of the first terminal device to the first radio access network device, so that the first radio access network device learns that the multicast session that the first terminal device joins has been activated, and the first radio access network device may enable the terminal device to resume the RRC connected state, to facilitate subsequent correct communication between the first radio access network device and the first terminal device, for example, multicast session receiving by the first terminal device in the RRC connected state.

In a possible implementation method, the terminal device context includes a multicast-related context of the first terminal device.

In a possible implementation method, before the second radio access network device sends the terminal device context of the first terminal device to the first radio access network device, the method further includes: The second radio access network device receives a context request message from the first radio access network device, where the context request message is used to request to obtain a context of the terminal device to perform small data transmission. The second radio access network device sends a partial context of the first terminal device to the first radio access network device, where the partial context of the first terminal device includes a small data transmission-related context.

In a possible implementation method, the method further includes: The second radio access network device sends a first paging message to the first radio access network device, where the first paging message is used to notify that the one or more multicast sessions are activated.

In a possible implementation method, the first paging message includes the identifiers of the one or more multicast sessions.

According to a seventh aspect, an embodiment of this application provides a wireless communication method. The method may be performed by a first terminal device or a module (for example, a chip) used in the first terminal device. The method includes: The first terminal device receives a second paging message from a first radio access network device, where the second paging message indicates that at least one multicast session is activated. The first terminal device sends indication information to the first radio access network device, where the indication information includes a non-small data transmission data indication and/or a multicast cause value, the at least one multicast session includes a multicast session that the first terminal device joins, the first terminal device is in a radio resource control RRC inactive state and is in a process of small data transmission, and the first radio access network device is a serving radio access network device of the first terminal device.

In the foregoing solution, the first terminal device sends the indication information to the first radio access network device, so that the first radio access network device learns, based on the indication information, that the first terminal device has data arriving on a radio bearer for non-small data transmission or that the first terminal device expects to enter an RRC connected state to receive the multicast session. This helps the first radio access network device determine whether to enable the first terminal device to resume the RRC connected state, and facilitates subsequent correct communication between the first radio access network device and the first terminal device, for example, multicast session receiving by the first terminal device in the RRC connected state.

In a possible implementation method, after the first terminal device sends the indication information to the first radio access network device, the method further includes: The first terminal device receives an RRC resume message from the first radio access network device, where the RRC resume message is used to resume an RRC connection of the first terminal device.

In a possible implementation method, before the first terminal device receives the RRC resume message from the first radio access network device, the method further includes: The first terminal device receives an RRC release message from the first radio access network device, where the RRC release message indicates the first terminal device to enter the RRC inactive state or an RRC idle state. The first terminal device sends an RRC resume request message to the first radio access network device, where the RRC resume request message is used to request to enter an RRC connected state. Alternatively, the first terminal device sends an RRC setup request message to the first radio access network device, where the RRC setup request message is used to request to set up an RRC connection.

In a possible implementation method, the second paging message further indicates a terminal device in the RRC connected state to receive the at least one multicast session. Alternatively, the second paging message further indicates that the at least one multicast session is a multicast session received by a terminal device in the RRC connected state or an RRC non-connected state.

In a possible implementation method, the multicast cause value indicates that the at least one multicast session includes the multicast session that the first terminal device joins, or indicates that the multicast session that the first terminal device joins is activated, or indicates that the first terminal device enters the RRC connected state to receive multicast.

According to an eighth aspect, an embodiment of this application provides a communication apparatus. The apparatus may be a terminal device or a module (for example, a chip) used in the terminal device. The apparatus has a function of implementing any implementation method in the first aspect to the seventh aspect. The function may be implemented by hardware, or may be implemented by hardware by executing corresponding software. The hardware or the software includes one or more modules corresponding to the function.

According to a ninth aspect, an embodiment of this application provides a communication apparatus, including a processor coupled to a memory. The processor is configured to invoke a program stored in the memory, to perform any implementation method in the first aspect to the seventh aspect. The memory may be located inside or outside the apparatus. In addition, there may be one or more processors.

According to a tenth aspect, an embodiment of this application provides a communication apparatus, including a processor and a memory. The memory is configured to store computer instructions. When the apparatus is run, the processor executes the computer instructions stored in the memory, to enable the apparatus to perform any implementation method in the first aspect to the seventh aspect.

According to an eleventh aspect, an embodiment of this application provides a communication apparatus, including units or means (means) used to perform the steps of any implementation method in the first aspect to the seventh aspect.

According to a twelfth aspect, an embodiment of this application provides a communication apparatus, including a processor and an interface circuit. The processor is configured to: communicate with another apparatus via the interface circuit, and perform any implementation method in the first aspect to the seventh aspect. There are one or more processors.

According to a thirteenth aspect, an embodiment of this application further provides a chip system, including: a processor, configured to perform any implementation method in the first aspect to the seventh aspect.

According to a fourteenth aspect, an embodiment of this application further provides a computer-readable storage medium. The computer-readable storage medium stores instructions. When the instructions are run on a communication apparatus, any implementation method in the first aspect to the seventh aspect is performed.

According to a fifteenth aspect, an embodiment of this application further provides a computer program product. The computer program product includes a computer program or instructions. When the computer program or the instructions are run by a communication apparatus, any implementation method in the first aspect to the seventh aspect is performed.

According to a sixteenth aspect, an embodiment of this application provides a communication system, including a first terminal device and a radio access network device. The first terminal device is configured to: receive a paging message, where the paging message includes identification information of at least one multicast session, and the first terminal device is in an RRC inactive state; and when a first condition is met, trigger an RRC connection resume procedure. The radio access network device is configured to send an RRC resume message to the first terminal device, where the RRC resume message is used to trigger the first terminal device to enter an RRC connected state. The first condition includes: the at least one multicast session includes a multicast session that the first terminal device joins, and the first terminal device is not in a process of small data transmission. Alternatively, the first condition includes: the paging message further includes identification information of at least one terminal device, the at least one multicast session includes a multicast session that the first terminal device joins, the terminal device is not in a process of small data transmission, and the identification information of the at least one terminal device does not include identification information of the first terminal device. The small data transmission is data and/or signaling transmission that is performed by the first terminal device in the RRC inactive state and in which a data volume is less than a preset threshold.

In a possible implementation method, the first terminal device is specifically configured to send an RRC resume request message to the radio access network device.

In a possible implementation method, the first terminal device is further configured to: when a second condition is met, determine not to trigger the RRC connection resume procedure. The second condition includes: the at least one multicast session includes the multicast session that the first terminal device joins, and the first terminal device is in the process of small data transmission.

In a possible implementation method, the first terminal device is further configured to send indication information to the radio access network device, where the indication information indicates that data and/or signaling arrive/arrives on a radio bearer for non-small data transmission, or the at least one multicast session includes the multicast session that the first terminal device joins.

In a possible implementation method, the first terminal device is further configured to: when a third condition is met, enter an RRC idle state, and trigger an RRC connection setup procedure. The third condition includes: the paging message further includes the identification information of the at least one terminal device, the at least one multicast session includes the multicast session that the first terminal device joins, the terminal device is not in the process of small data transmission, and the identification information of the at least one terminal device includes the identification information of the first terminal device.

According to a seventeenth aspect, an embodiment of this application provides a communication system, including a terminal device and a radio access network device. The radio access network device is configured to send a first message to the terminal device, where the first message includes identification information of at least one multicast session, and the terminal device is in an RRC inactive state. The terminal device is configured to: when the at least one multicast session includes a multicast session that the terminal device joins, and the terminal device is in a process of small data transmission, enter an RRC idle state, and trigger an RRC connection setup procedure. The small data transmission is data and/or signaling transmission that is performed by the terminal device in the RRC inactive state and in which a data volume is less than a preset threshold.

In a possible implementation method, the first message is an RRC message or a paging message.

According to an eighteenth aspect, an embodiment of this application provides a communication system. The communication system includes a first radio access network device configured to implement any method in the fourth aspect, and a first terminal device configured to implement any method in the seventh aspect.

According to a nineteenth aspect, an embodiment of this application provides a communication system. The communication system includes a first terminal device and a first radio access network device configured to implement any method in the fifth aspect. The first terminal device is configured to receive an RRC resume message, where the RRC resume message is used to resume an RRC connection of the first terminal device.

According to a twentieth aspect, an embodiment of this application provides a communication system. The communication system includes a first radio access network device and a second radio access network device configured to implement any method in the sixth aspect. The first radio access network device is configured to receive a terminal device context of a first terminal device.

### BRIEF DESCRIPTION OF DRAWINGS

FIG. 1 is a diagram of an architecture of a communication system to which an embodiment of this application is applied;
FIG. 2 is a schematic flowchart of a wireless communication method according to an embodiment of this application;
FIG. 3 is a schematic flowchart of a wireless communication method according to an embodiment of this application;
FIG. 3(a) is a schematic flowchart of a wireless communication method according to an embodiment of this application;
FIG. 3(b) is a schematic flowchart of a wireless communication method according to an embodiment of this application;
FIG. 3(c) is a schematic flowchart of a wireless communication method according to an embodiment of this application;
FIG. 3(d) is a schematic flowchart of a wireless communication method according to an embodiment of this application;
FIG. 3(e) is a schematic flowchart of a wireless communication method according to an embodiment of this application;
FIG. 3(f) is a schematic flowchart of a wireless communication method according to an embodiment of this application;
FIG. 4 is a diagram of a communication apparatus according to an embodiment of this application; and
FIG. 5 is a diagram of a communication apparatus according to an embodiment of this application.

### DESCRIPTION OF EMBODIMENTS

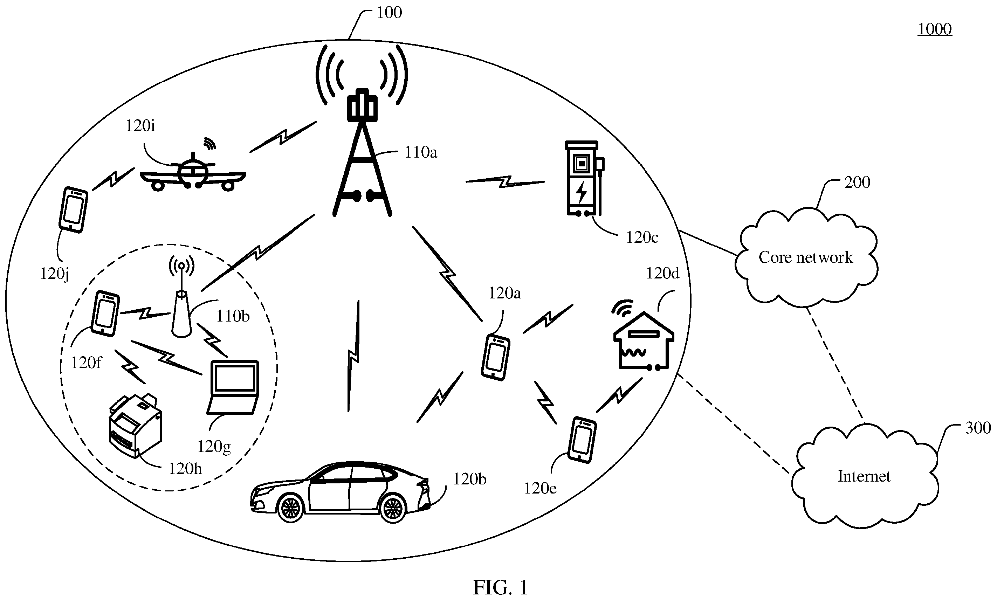

FIG. 1 is a diagram of an architecture of a communication system to which an embodiment of this application is applied. The communication system 1000 includes a radio access network 100 and a core network 200. Optionally, the communication system 1000 further includes an internet 300. The radio access network 100 may include at least one radio access network device, for example, 110a and 110b in FIG. 1, and may further include at least one terminal device, for example, 120a to 120j in FIG. 1. 110a is a base station, 110b is a micro base station, 120a, 120e, 120f, and 120j are mobile phones, 120b is a vehicle, 120c is a fuel dispenser, 120d is a home access point (home access point, HAP) deployed indoors or outdoors, 120g is a notebook computer, 120h is a printer, and 120i is an uncrewed aerial vehicle. A same terminal device or radio access network device may provide different functions in different application scenarios. For example, the mobile phones in FIG. 1 include 120a, 120e, 120f, and 120j. The mobile phone 120a may access the base station 110a, connect to the vehicle 120b, directly communicate with the mobile phone 120e, and access the HAP. The mobile phone 120b may access the HAP and directly communicate with the mobile phone 120a. The mobile phone 120f may access the micro base station 110b, connect to the notebook computer 120g, and connect to the printer 120h. The mobile phone 120j may control the uncrewed aerial vehicle 120i.

The terminal device is connected to the radio access network device, and the radio access network device is connected to the core network. A core network device and the radio access network device may be independent and different physical devices, or functions of the core network device and logical functions of the radio access network device are integrated into a same physical device, or some functions of the core network device and some functions of the radio access network device are integrated into one physical device. Terminal devices may be connected to each other in a wired or wireless manner, and radio access network devices may be connected to each other in a wired or wireless manner. FIG. 1 is only a diagram. The communication system may further include other network devices, for example, may further include a wireless relay device and a wireless backhaul device that are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a base station in a 6th generation (6th generation, 6G) mobile communication system, a base station in a future mobile communication system, an access node in a wireless fidelity (wireless fidelity, Wi-Fi) system, or the like. The radio access network device may alternatively be a module or unit that completes some functions of a base station, for example, may be a central unit (central unit, CU), or may be a distributed unit (distributed unit, DU). The radio access network device may be a macro base station (for example, 110a in FIG. 1), or may be a micro base station or an indoor base station (for example, 110b in FIG. 1), or may be a relay node, a donor node, or the like. A specific technology and a specific device form that are used by the radio access network device are not limited in embodiments of this application.

The terminal device may also be referred to as a terminal, user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, autonomous driving, telemedicine, a smart grid, smart furniture, a smart office, a smart wearable, smart transportation, and a smart city. The terminal device may be a mobile phone, a tablet computer, a computer having a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal device are not limited in embodiments of this application.

The radio access network device and the terminal device may be at fixed locations, or may be movable. The radio access network device and the terminal device may be deployed on land, where the deployment includes indoor or outdoor, and handheld or vehicle-mounted deployment; may be deployed on water; or may be deployed on an airplane, a balloon, or an artificial satellite in air. Application scenarios of the radio access network device and the terminal device are not limited in embodiments of this application.

Roles of the radio access network device and the terminal device may be relative. For example, a helicopter or the unmanned aerial vehicle 120i in FIG. 1 may be configured as a mobile base station. For the terminal device 120j accessing the radio access network 100 through 120i, the terminal device 120i is a base station. However, for the base station 110a, 120i is a terminal device. In other words, communication between 110a and 120i is performed according to a wireless air interface protocol. Certainly, communication between 110a and 120i may alternatively be performed according to an interface protocol between base stations. In this case, for 110a, 120i is also a base station. Therefore, both the radio access network device and the terminal device may be collectively referred to as communication apparatuses. 110a and 110b in FIG. 1 may be referred to as communication apparatuses having a function of the radio access network device, and 120a to 120j in FIG. 1 may be referred to as communication apparatuses having a function of the terminal device.

In embodiments of this application, the function of the radio access network device may alternatively be performed by a module (for example, a chip) in the radio access network device, or may alternatively be performed by a control subsystem including the function of the radio access network device. The control subsystem including the function of the radio access network device herein may be a control center in the foregoing application scenarios such as the smart grid, the industrial control, the smart transportation, and the smart city. The function of the terminal device may alternatively be performed by a module (for example, a chip or a modem) in the terminal device, or may alternatively be performed by an apparatus including the function of the terminal device.

For ease of understanding solutions in embodiments of this application, the following first describes nouns or terms in embodiments of this application. The nouns or terms are also a part of the present invention.

### 1. Statuses of a terminal device

Currently, the terminal device has three radio resource control (radio resource control, RRC) statuses: an RRC connected (RRC_connected) state, an RRC idle (RRC_idle) state, and an RRC inactive (RRC_inactive) state.

In the RRC connected state, an RRC connection is set up between the terminal device and a radio access network device, and data transmission may be performed between the terminal device and the radio access network device. When no data is transmitted, the radio access network device may release the terminal device to the RRC idle state or the RRC inactive state.

In the RRC idle state, no RRC connection is set up between the terminal device and the radio access network device, and usually no data transmission is performed between the terminal device and the radio access network device.

In the RRC inactive state, the radio access network device suspends (suspend) the RRC connection and maintains context information of the terminal device. When the terminal device subsequently needs to be resumed to the RRC connected state, because the radio access network device maintains the context information of the terminal device, the terminal device can be quickly resumed to the RRC connected state.

### 2. Paging

Because a terminal device has mobility, when the terminal device is in an RRC idle state or an RRC inactive state, to find the terminal device, a network may send a paging message in a broadcast manner. After receiving the paging message, the terminal device may determine whether the paging message includes identification information of the terminal device. If the paging message includes the identification information of the terminal device, it indicates that the network is paging the terminal device. Therefore, the terminal device may trigger setup of an RRC connection, and enter an RRC connected state.

Currently, there are two paging manners. One of the paging manners is core network paging, to be specific, a core network sends a paging message in a tracking area (tracking area, TA) indicated by a tracking area identity (tracking area identity, TAI) list. The TAI list includes one or more TAIs, one TAI identifies one TA, and one TA includes one or more cells. The paging message is also referred to as a core network paging message.

The other one of the paging manners is RAN-based notification area (RAN-based notification area, RNA) paging, to be specific, a radio access network device sends a paging message within a range of an RNA. One RNA includes one or more cells, and a range of the RNA is smaller than a range of the TA. The paging message is also referred to as a RAN paging message or an RNA paging message.

### 3. Small data transmission (small data transmission, SDT)

For a terminal device in an RRC inactive state, to avoid an increase in power consumption of the terminal device caused by entering an RRC connected state under low service traffic, when an amount of data to be transmitted by the terminal device in the RRC inactive state is less than a preset threshold, the terminal device may not enter the RRC connected state, but perform data and/or signaling transmission with a radio access network device in the RRC inactive state. This process is referred to as small data transmission. In other words, the small data transmission is data and/or signaling transmission that is performed by the terminal device in the RRC inactive state and in which a data volume is less than the preset threshold.

A manner of small data transmission includes but is not limited to the following two methods.

Method 1: Perform small data transmission in a random access channel (random access channel, RACH) procedure.

In a manner, if the RACH procedure is a four-step RACH procedure, the terminal device may send uplink small data (also referred to as SDT UL data) to the radio access network device in an MSG 3, and also send an RRC resume request (RRCResumeRequest) message in the MSG 3.

In another manner, if the RACH procedure is a two-step RACH procedure, the terminal device may send uplink small data to the radio access network device in an MSG A, and also send an RRC resume request message in the MSG A.

Method 2: Perform small data transmission by using a configured grant (configured grant, CG) resource.

The terminal device uses the CG resource to send uplink small data to the radio access network device, and also send an RRC resume request message. The CG resource is configured by the radio access network device for the terminal device by using an RRC release (RRCRelease) message.

In the foregoing method 1 and method 2, the RRC resume request message sent by the terminal device to the radio access network device is used to trigger resume of an RRC connection used for small data transmission.

In the foregoing solutions of small data transmission, the terminal device in the RRC inactive state can send small data without entering the RRC connected state. Therefore, power consumption overheads of the terminal device caused when the terminal device enters the RRC connected state for data transmission with a small data volume are reduced.

### 4. Multicast communication

The multicast communication means that a same service and same data are provided to a group of specific terminal devices. Usually, a network side may send a multicast service to a terminal device in an RRC connected state by using a multicast session. When the network side does not need to send data of a multicast session to the terminal device, the network side may enable the terminal device to enter an RRC idle state or an RRC inactive state, to reduce power consumption of the terminal device. When a multicast session is activated or data of the multicast session arrives, the network side notifies, by using a group notification mechanism, the terminal device in the RRC idle state or the RRC inactive state. After receiving a group notification, the terminal device may set up a connection to the network side again, to receive the data of the multicast session. Once the terminal device leaves the multicast session, the terminal device may stop monitoring a group notification related to the multicast session.

In a scenario, after a multicast session is activated, the network side pages a terminal device that joins the multicast session and that is in the RRC inactive state. In this case, the terminal device may be in a process of small data transmission, or may not be in a process of small data transmission. In this case, a specific operation that the terminal device needs to perform needs to be resolved.

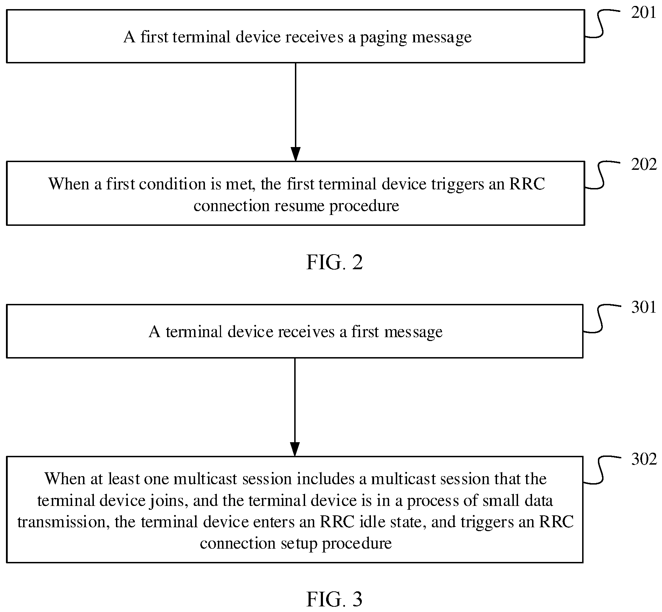

FIG. 2 is a schematic flowchart of a wireless communication method according to an embodiment of this application. The method includes the following steps.

Step 201: A first terminal device receives a paging message.

The first terminal device is in an RRC inactive state.

The paging message is a paging message used for group notification, and the paging message includes identification information of at least one multicast session, to notify the terminal device of the activated multicast session. When a core network notifies a radio access network device that a multicast session has been activated, or the radio access network device receives data of the multicast session, the radio access network device may send, in a group notification manner, a paging message to a terminal device that is in the RRC inactive state and that joins the multicast session, to notify that the multicast session is activated. Identification information that is of the multicast session and that is in the paging message may indicate a specific multicast service in a specific public land mobile network (public land mobile network, PLMN).

In an implementation method, the multicast session may be a multicast broadcast service (multicast broadcast service, MBS) multicast session, and the identification information of the multicast session may be a temporary mobile group identifier (temporary mobile group identifier, TMGI).

Step 202: When a first condition is met, the first terminal device triggers an RRC connection resume procedure.

In an implementation method, the first condition includes: the at least one multicast session in the paging message includes a multicast session that the first terminal device joins, and the first terminal device is not in a process of small data transmission (SDT procedure is not on-going). That the at least one multicast session includes the multicast session that the first terminal device joins indicates that one or more specific multicast sessions that the first terminal device joins have been activated, or is understood as that a network side needs to send data of a multicast session to the first terminal device. In this embodiment of this application, being not in the process of small data transmission means that no small data transmission is currently being performed, and the two have a same meaning. Being in the process of small data transmission means that small data transmission is currently being performed, and the two have a same meaning. This is uniformly described herein, and details are not described subsequently.

For example, the paging message includes a TMGI_1, a TMGI_2, a TMGI_3, and a TMGI_4, indicating that multicast sessions identified by the TMGI_1, the TMGI_2, the TMGI_3, and the TMGI_4 have been activated. If identification information of a multicast session that UE_1 has joined includes a TMGI_5 and a TMGI_6, the at least one multicast session in the paging message does not include the multicast session that the first terminal device joins, indicating that the network side does not need to send data of a multicast session to the UE_1. If identification information of a multicast session that UE_1 has joined includes the TMGI_1 and a TMGI_6, the at least one multicast session in the paging message includes the multicast session that the first terminal device joins, indicating that the network side needs to send data of a multicast session to the UE_1. Specifically, the network side needs to send data of a multicast session identified by the TMGI_1 to the UE_1.

That the first terminal device triggers an RRC connection resume procedure may be specifically: The first terminal device sends an RRC resume request message to the radio access network device, to request to resume from the RRC inactive state to an RRC connected state. After receiving the RRC resume request message, the radio access network device may send an RRC resume message to the first terminal device, to trigger the first terminal device to resume from the RRC inactive state to the RRC connected state.

In the foregoing solution, if the at least one multicast session in the paging message sent by the network side includes the multicast session that the first terminal device joins, it indicates that the network side needs to send data of the multicast session to the first terminal device, and the first terminal device may request the network side to resume an RRC connection to receive the data of the multicast session. However, if the first terminal device is currently in the process of small data transmission after receiving the paging message, it indicates that the first terminal device has sent the RRC resume request message to the network side before receiving the paging message, there is an available data/signaling transmission path between the radio access network device and the first terminal device, and the radio access network device has known a cell on which the first terminal device camps. Therefore, if the network side needs to enable the first terminal device to enter the RRC connected state to receive the multicast session, the network side may send the RRC resume message to the first terminal device on the transmission path. Therefore, if the first terminal device is currently in the process of small data transmission after receiving the paging message, the first terminal device does not need to send the RRC resume request message to the network side again, but may wait for a network side device to send the RRC resume message. The RRC resume message may be in response to an RRC resume request message sent by the first terminal device when the first terminal device triggers small data transmission. Therefore, unnecessary power consumption overheads can be reduced, processing complexity of the terminal device can be reduced, and signaling overheads can be reduced.

In an implementation method, the paging message further includes identification information of at least one terminal device, and the at least one terminal device is a terminal device that the core network needs to page. When the identification information (UE-Identity) of the at least one terminal device in the paging message includes identification information of the first terminal device, it indicates that the core network is paging the first terminal device, and the identification information of the terminal device is identification information associated with core network paging. When the identification information of the at least one terminal device in the paging message does not include the identification information of the first terminal device, it indicates that the core network is not paging the first terminal device. That the identification information of the at least one terminal device in the paging message does not include the identification information of the first terminal device may also be replaced with/understood as that the identification information of the at least one terminal device in the paging message does not match (match) the identification information of the first terminal device.

In an implementation method, the first condition in step 202 may be replaced with the following: The at least one multicast session in the paging message includes the multicast session that the first terminal device joins, the identification information of the at least one terminal device in the paging message does not include the identification information of the first terminal device, and the first terminal device is not in the process of small data transmission. In other words, when the first terminal device is not in the process of small data transmission, is not paged by the core network, but is notified that a multicast session is activated, the first terminal device triggers the RRC connection resume procedure, enters the RRC connected state, and subsequently receives data sent by a network by using the activated multicast session.

In another implementation method, if the first condition is not met but a second condition is met, the first terminal device determines not to trigger the RRC connection resume procedure. The second condition includes: the at least one multicast session in the paging message includes the multicast session that the first terminal device joins, and the first terminal device is in the process of small data transmission. In other words, when the first terminal device determines that one or more specific multicast sessions of the first terminal device have been activated, and the network needs to send data to the first terminal device by using the activated multicast session, but the first terminal device is currently in the process of small data transmission, the first terminal device determines not to trigger the RRC connection resume procedure. Specifically, when the first terminal device is in the RRC inactive state, the first terminal device determines not to send the RRC resume request message. A reason is as follows: It can be learned from the foregoing procedure of small data transmission that if the first terminal device is in the process of small data transmission, the first terminal device has sent the RRC resume request message to the radio access network device, an available signaling/data transmission link has been maintained between the first terminal device and the radio access network device, and the radio access network device to which the first terminal device is connected is known to the network side. Therefore, the first terminal device does not need to repeatedly send the RRC resume request message, and therefore signaling overheads can be reduced. Because the radio access network device knows that the first terminal device is performing small data transmission, and needs to send the data of the multicast session to the first terminal device, the radio access network device may send the RRC resume message to the first terminal device after small data transmission of the first terminal device is completed, to trigger the first terminal device to enter the RRC connected state; and then send the data of the multicast session to the first terminal device in the RRC connected state. Alternatively, the radio access network device may first stop small data transmission of the first terminal device, and send the RRC resume message to the first terminal device, to trigger the first terminal device to enter the RRC connected state; and then send the data of the multicast session to the first terminal device in the RRC connected state.

In another implementation method, if the first condition and the second condition are not met but a third condition is met, the first terminal device enters an RRC idle state and triggers an RRC connection setup procedure. The third condition includes: the at least one multicast session in the paging message includes the multicast session that the first terminal device joins, the identification information of the at least one terminal device in the paging message includes the identification information of the first terminal device, and the first terminal device is not in the process of small data transmission. In other words, when the first terminal device is not in the process of small data transmission, but is paged by the core network, and is further notified that a multicast session is activated, the first terminal device enters the RRC idle state, triggers the RRC connection setup procedure, and subsequently receives data sent by the network by using the activated multicast session.

In a possible implementation method, regardless of whether the first condition, the second condition, or the third condition is met, it indicates that the at least one multicast session in the paging message includes the multicast session that the first terminal device joins. Therefore, the first terminal device may send indication information to the radio access network device, where the indication information indicates that the at least one multicast session in the paging message includes one or more specific multicast sessions that the first terminal device joins, or indicates that one or more specific multicast sessions that the first terminal device joins have been activated, or indicates that a multicast service arrives, or indicates that data and/or signaling arrive/arrives on a radio bearer for non-small data transmission (arrival of data and/or signaling mapped to radio bearers not configured for SDT). Optionally, the indication information may be carried in assistance information (UEAssistanceInformation) and sent to the radio access network device. Optionally, the indication information is non-SDT data indication information (nonSDT-DataIndication).

In the foregoing solution, based on the indication information sent by the first terminal device, the radio access network device may learn that the first terminal device has data or signaling arriving on the radio bearer for non-small data transmission, or learn that the first terminal device expects to enter the RRC connected state to receive the multicast session. This helps the radio access network device determine whether to enable the first terminal device to resume the RRC connected state, and facilitates subsequent correct communication between the radio access network device and the first terminal device. For example, after receiving the paging message, if the first terminal device does not expect to enter the RRC connected state to receive the multicast session indicated in the paging message, or has released the multicast session, the first terminal device may not send the indication information to the radio access network device, and the radio access network device does not need to enable the first terminal device to enter the RRC connected state.

The following describes an embodiment about whether a terminal device needs to monitor a paging message.

In an implementation method, the terminal device in an RRC inactive state may determine, based on a status of small data transmission, whether to monitor a paging message used for group notification. The paging message includes identification information of at least one multicast session, and the terminal device joins one or more multicast sessions. For detailed descriptions of the paging message, refer to the descriptions in step 201. In this solution, the terminal device determines, based on the status of small data transmission, to monitor the paging message used for group notification or not monitor the paging message used for group notification, instead of always monitoring the paging message used for group notification. This helps reduce unnecessary power consumption overheads, reduce processing complexity of the terminal device, and reduce signaling overheads.

The following describes different implementation methods in which the terminal device determines, based on the status of small data transmission, whether to monitor the paging message used for group notification.

Implementation method 1: The terminal device monitors the paging message when the terminal device is not performing small data transmission.

In this solution, when the terminal device in the RRC inactive state does not perform small data transmission, it indicates that a radio access network device does not know a cell on which the terminal device camps, and there is no available data/signaling path between the terminal device and the radio access network device. Therefore, the terminal device needs to determine, in time through paging monitoring, whether a network side sends a paging message used to notify an activated multicast session, to ensure that data of the multicast session can be received in time.

Implementation method 2: The terminal device does not monitor the paging message when the terminal device is performing small data transmission.

In this solution, if the terminal device is currently in a process of small data transmission, it indicates that a radio access network device has known a cell on which the terminal device camps, there is an available data/signaling path between the terminal device and the radio access network device, and the terminal device has sent an RRC resume request message to a network side. Therefore, if the network side needs to enable the terminal device to enter an RRC connected state to receive a multicast session, the network side may send an RRC resume message to the terminal device. Therefore, the terminal device does not need to monitor a paging message used to notify that the multicast session has been activated, and does not need to decode a data block on a PDSCH that carries the paging message. In this way, unnecessary power consumption overheads can be reduced, processing complexity of the terminal device can be reduced, and signaling overheads can be reduced.

For the implementation method 2, because the terminal device is performing small data transmission, there is the available data/signaling path between the terminal device and the radio access network device. Therefore, the radio access network device may send an RRC message to the terminal device on the path. The RRC message includes identification information of at least one multicast session, and the RRC message indicates that the at least one multicast session has been activated. Optionally, the RRC message further indicates the terminal device to remain in the RRC inactive state to receive the multicast session. When the at least one multicast session includes a multicast session that the terminal device joins, the terminal device receives, in the RRC inactive state, the multicast session that the terminal device joins. The paging message used for group notification is a broadcast message, and the paging message is sent on an initial (initial) bandwidth part (bandwidth part, BWP). If a sum of a bandwidth range of a BWP in which the terminal device is currently performing small data transmission and a bandwidth range of the initial BWP exceeds a bandwidth supported by the terminal device (for example, the terminal device is a low-capability terminal device), the terminal device cannot simultaneously perform small data transmission and paging message receiving. If the terminal device needs to receive group paging in the process of small data transmission, the terminal device needs to switch a BWP to the initial BWP to receive the group paging. This causes a data packet loss in the process of small data transmission. However, in the foregoing solution, the terminal device may receive, in the BWP of small data transmission by using dedicated signaling (that is, the RRC message), a notification used to notify that the multicast session has been activated, and that the multicast session has been activated is not notified by using the paging message. Therefore, BWP switching does not need to be performed, the packet loss can be avoided, and implementation complexity of the terminal device can be reduced.

Implementation method 3: The terminal device does not monitor the paging message when the terminal device is performing small data transmission, and the terminal device does not support receiving of a multicast session in the RRC inactive state.

In this solution, if the terminal device is currently in a process of small data transmission, it indicates that a radio access network device has known a cell on which the terminal device camps, there is an available data/signaling path between the terminal device and the radio access network device, and the terminal device has sent an RRC resume request message to the network side. Therefore, if the network side needs to enable the terminal device to enter an RRC connected state to receive a multicast session, the network side may send an RRC resume message to the terminal device. In addition, because the terminal device does not support receiving of a multicast session in the RRC inactive state, the terminal device needs to enter the RRC connected state to receive data of the multicast session. Therefore, the terminal device may not monitor a paging message used to notify that the multicast session has been activated, and does not need to decode a data block on a PDSCH that carries the paging message, but waits for the network side to actively indicate the terminal device to enter the RRC connected state. Therefore, this solution can reduce unnecessary power consumption overheads, reduce processing complexity of the terminal device, and reduce signaling overheads.

Implementation method 4: The terminal device monitors the paging message when the terminal device is performing small data transmission, and the terminal device supports receiving of a multicast session in the RRC inactive state.

If the terminal device is currently in a process of small data transmission, it indicates that a radio access network device has known a cell on which the terminal device camps, there is an available data/signaling path between the terminal device and the radio access network device, and the terminal device has sent an RRC resume request message to a network side. Therefore, if the network side needs to enable the terminal device to enter an RRC connected state to receive a multicast session, the network side may send an RRC resume message to the terminal device, to trigger the terminal device to enter the RRC connected state to receive the multicast session. Therefore, usually, the terminal device may not need to monitor a paging message used to notify that the multicast session has been activated, but only needs to wait for the RRC resume message sent by the radio access network device. However, in this solution, if the terminal device is performing small data transmission, and the terminal device supports receiving of a multicast session in the RRC inactive state, the terminal device needs to monitor the paging message. A reason is as follows: Because the terminal device supports receiving of a multicast session in the RRC inactive state, the radio access network device may not send the RRC resume message to the terminal device to trigger the terminal device to enter the RRC connected state and receive data of the multicast session in the RRC connected state. Therefore, the terminal device needs to actively monitor the paging message to learn whether the multicast session has been activated, to avoid missing the data that is of the multicast session and that is delivered by a network. When the terminal device detects that the multicast session has been activated, the terminal device may receive the data of the multicast session in the RRC inactive state.

Implementation method 5: The terminal device monitors the paging message when the terminal device is performing small data transmission, the terminal device supports receiving of a multicast session in the RRC inactive state, and a cell on which the terminal device camps supports providing a multicast session for a terminal device in the inactive state.

The multicast session provided by the cell on which the terminal device camps for the terminal device in the inactive state is a multicast session that the terminal device has joined. Because the terminal device supports receiving of a multicast session in the RRC inactive state, and the cell on which the terminal device currently camps supports sending the multicast session to a terminal device in the RRC inactive state, a radio access network device may not send an RRC resume message to the terminal device to trigger the terminal device to enter an RRC connected state and receive data of the multicast session in the RRC connected state. Therefore, the terminal device needs to actively monitor the paging message, to learn whether the multicast session has been activated, and avoid missing the data that is of the multicast session and that is delivered by a network. When the terminal device detects that the multicast session has been activated, the terminal device may receive the data of the multicast session in the RRC inactive state.

In the foregoing solution, it needs to be ensured that when the cell on which the terminal device camps supports providing a multicast session for a terminal device in the inactive state, the terminal device monitors the paging message, to prevent the terminal device from performing invalid monitoring, and help reduce unnecessary power consumption overheads.

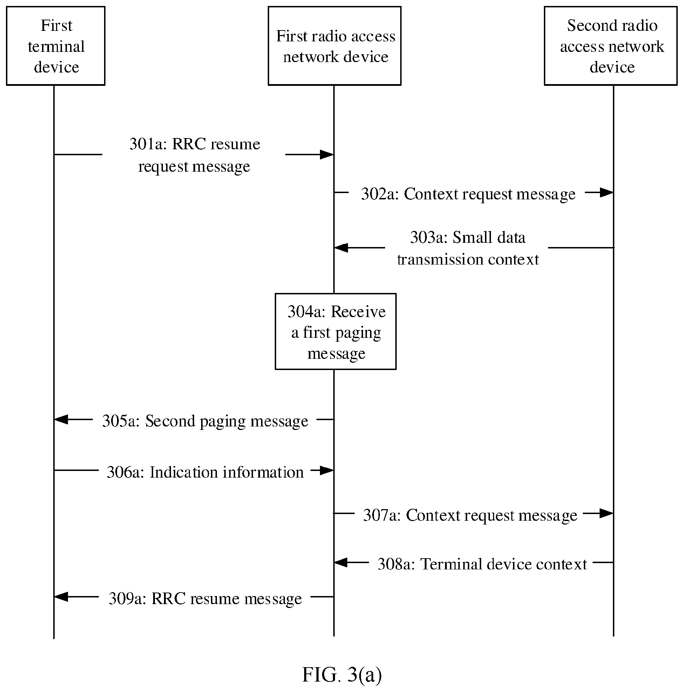

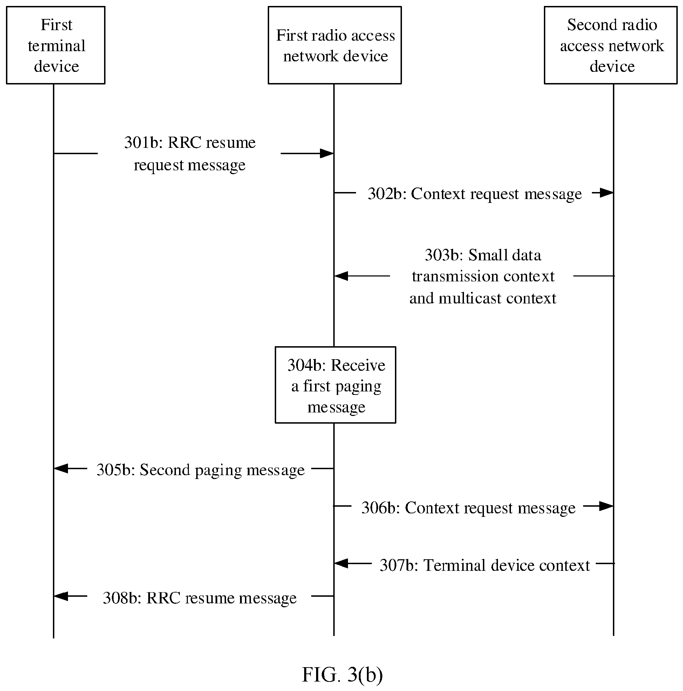

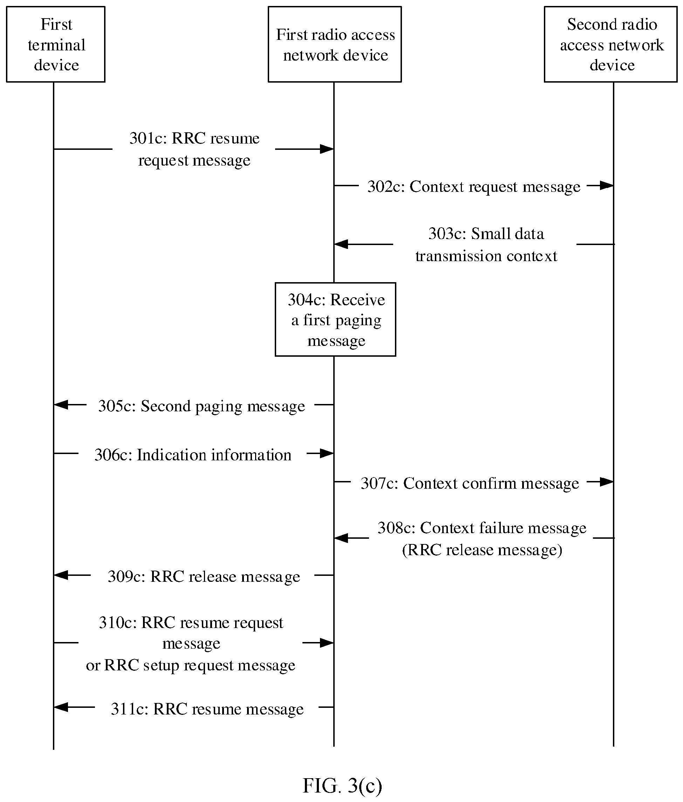

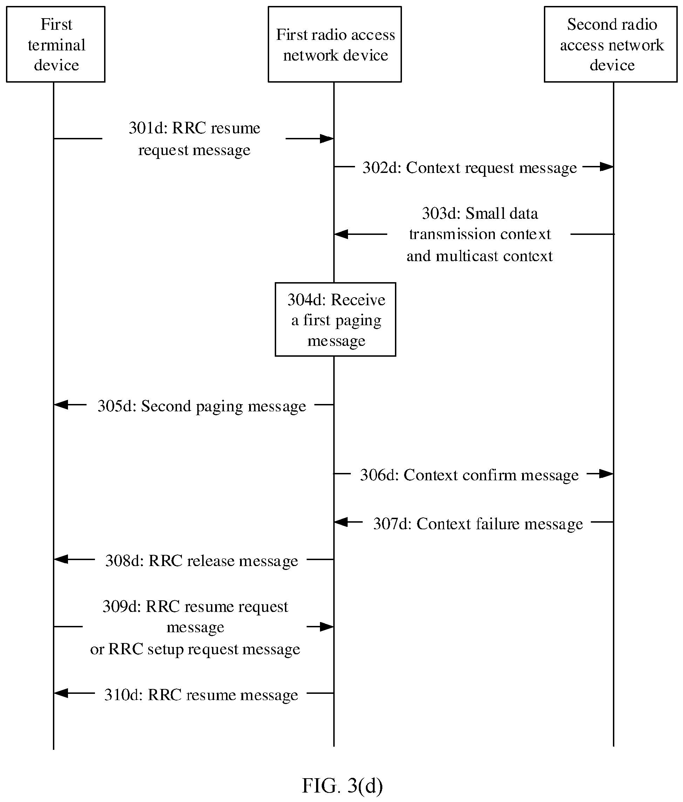

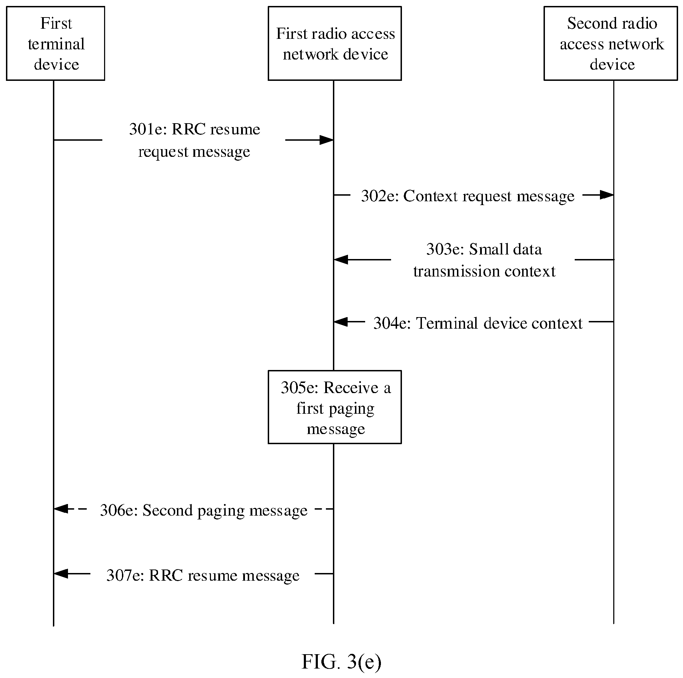

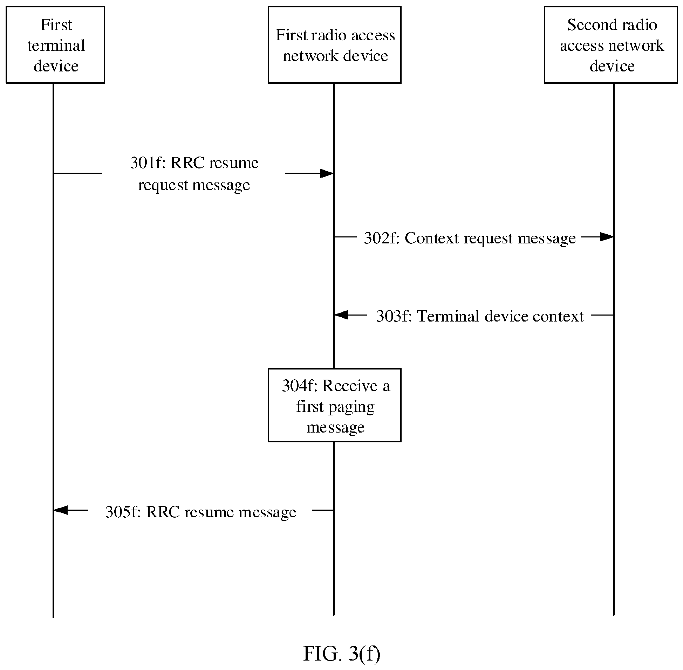

FIG. 3 is a schematic flowchart of a wireless communication method according to an embodiment of this application. The method includes the following steps.

Step 301: A terminal device receives a first message.

The first message may be a paging message or an RRC message.

When the first message is a paging message, specific content and an implementation of the paging message are the same as those of the paging message in step 201. For details, refer to the foregoing descriptions.

When the first message is an RRC message, the RRC message includes identification information of at least one multicast session, the RRC message indicates that the at least one multicast session has been activated, and the RRC message is a unicast message or dedicated signaling.

Step 302: When the at least one multicast session includes a multicast session that the terminal device joins, and the terminal device is in a process of small data transmission, the terminal device enters an RRC idle state, and triggers an RRC connection setup procedure.

When the at least one multicast session in the first message includes the multicast session that the terminal device joins, it indicates that one or more specific multicast sessions that the terminal device joins have been activated, or it is understood as that a network side needs to send data of a multicast session to the terminal device.

In the foregoing solution, if the at least one multicast session in the first message sent by the network side includes the multicast session that the terminal device joins, it indicates that the network side needs to send data of a multicast session to the terminal device, and the terminal device may request the network side to resume an RRC connection to receive the data of the multicast session. However, if the terminal device is currently in the process of small data transmission after receiving the paging message, it indicates that a radio access network device has known a cell on which the terminal device camps, there is an available data/signaling path between the terminal device and the radio access network device, and the terminal device has sent an RRC resume request message to the network side before receiving the paging message. Therefore, if the network side needs to enable the terminal device to enter an RRC connected state to receive the multicast session, the network side may send an RRC resume message to the terminal device. Therefore, if the terminal device is currently in the process of small data transmission after receiving the paging message, the terminal device does not need to send the RRC resume request message to the network side again, but can directly enter the RRC idle state and trigger the RRC connection setup procedure, so that the terminal device can quickly enter the RRC connected state and receive the data of the multicast session, unnecessary power consumption overheads can be reduced, processing complexity of the terminal device can be reduced, and signaling overheads can be reduced.

Because the terminal device moves in an RRC inactive state, if the radio access network device (also referred to as a serving access network device (serving gNB), a receiving access network device (receiving gNB), or a first radio access network device) currently accessed by the terminal device is not a last serving radio access network device (last serving gNB, also referred to as an anchor access network device (anchor gNB) or a second radio access network device), after the terminal device triggers a procedure of small data transmission, the first radio access network device performs a procedure of retrieving a terminal device context (retrieve UE context). The first radio access network device sends a retrieve terminal device context request message to the second radio access network device, where the retrieve terminal device context request message indicates a small data transmission (SDT) request. The second radio access network device determines whether to relocate the terminal device context (UE context relocation).

The last serving radio access network device or the anchor access network device is a radio access network device that last provides a service for the terminal device or a radio access network device that is last accessed by the terminal device in the RRC connected state before the terminal device enters the RRC inactive state, or is understood as a radio access network device that maintains a connection between the terminal device and a core network.

### Case 1: Small data transmission with context relocation (SDT with UE context relocation)

If the second radio access network device determines to relocate a full terminal device context, the second radio access network device sends the full terminal device context to the first radio access network device. This is referred to as small data transmission with context relocation. In this case, uplink small data is sent from the first radio access network device to a user plane function (user plane function, UPF) network element. After small data transmission ends, the first radio access network device may send an RRC release (RRCRelease) message to the terminal device, to release the terminal device to the RRC inactive state or the RRC idle state. If downlink non-small data/signaling arrives or uplink non-small data arrives in the process of small data transmission, the first radio access network device may send an RRC resume (RRCResume) message to the terminal device, so that the terminal device returns to the RRC connected state.

### Case 2: Small data transmission without context relocation (SDT without UE context relocation)

If the second radio access network device determines not to relocate a full terminal device context, the second radio access network device sends a partial terminal device context (partial UE context) to the first radio access network device, where the partial terminal device context includes an SDT radio link control (radio link control, RLC) context information required for processing small data transmission. This is referred to as small data transmission without context relocation. The second radio access network device maintains a packet data convergence protocol (packet data convergence protocol, PDCP) entity. The first radio access network device establishes an SDT-related RLC context, and forwards small data/signaling to the second radio access network device. Then, the second radio access network device sends the small data/signaling to the core network.

With reference to embodiments of FIG. 3(a) to FIG. 3(e), the following describes how to define behavior of the terminal device, the first radio access network device, and the second radio access network device when the terminal device performs small data transmission in the RRC inactive state and if one or more specific multicast sessions that the terminal device joins are activated, that is, if a multicast service needs to be transmitted. The following embodiments of FIG. 3(a) to FIG. 3(e) are for the case 2, and the following embodiment of FIG. 3(f) is for the case 1.

It should be noted that the following embodiments of FIG. 3(a) to FIG. 3(f) may be independently implemented, or may be implemented in combination with the embodiment of FIG. 2 or FIG. 3. This is not limited in this application.

FIG. 3(a) is a schematic flowchart of a wireless communication method according to an embodiment of this application. The method includes the following steps.

Step 301a: A first terminal device sends an RRC resume request message to a first radio access network device.

The RRC resume request message is used to trigger small data transmission (SDT).

For example, the RRC resume request message is carried in a random access message 3 (MSG 3) or a random access message A (MSG A) sent by the first terminal device.

It should be noted that a name of the RRC resume request message may also change, for example, may be referred to as an RRC message or an RRC request message.

The first terminal device supports receiving of a multicast service in an RRC inactive state, and the first terminal device joins one or more multicast sessions. The multicast session, the multicast service, and multicast in this application may be interchanged in some places, and represent a same meaning.

Step 302a: The first radio access network device sends a context request message to a second radio access network device.

The context request message is also referred to as a retrieve UE context request (RETRIEVE UE CONTEXT REQUEST) message, a context retrieve request message, a retrieve request message, or the like. This is uniformly described herein, and details are not described below again.

The context request message is used to request to obtain a small data transmission-related context of the first terminal device, which is also referred to as a small data transmission context.

Step 303a: The second radio access network device sends a partial context (PARTIAL UE CONTEXT) of the first terminal device to the first radio access network device.

The partial context includes a context used for small data transmission (SDT related context).

The small data transmission context of the first terminal device is a part of content in a terminal device context of the first terminal device, and the terminal device context of the first terminal device is also referred to as a full context (full UE context) of the first terminal device.

For example, the partial context is carried in a partial context transfer (PARTIAL UE CONTEXT TRANSFER) message and sent to the first radio access network device.

Step 304a: The first radio access network device receives a first paging message.

The first paging message is from the second radio access network device or a core network device. For example, if the first paging message is from the second radio access network device, the first paging message may also be referred to as a RAN multicast group paging (RAN multicast group paging) message. For example, if the first paging message is from an access and mobility management function (access and mobility management function, AMF) network element, the first paging message may also be referred to as a multicast group paging (multicast group paging) message. This is uniformly described herein, and details are not described subsequently.

The first paging message includes identifiers of one or more multicast sessions, and the first paging message is used to notify that the one or more multicast sessions are activated. Optionally, the first paging message further includes information used to page a terminal device, and the information may be a paging sending location, or may be information used to determine the paging sending location or information used to determine a paging occasion (paging occasion). The information used to page the terminal device is determined based on an identifier of a terminal device that joins the at least one multicast session. For example, the information used to page the terminal device is a value of the identifier 5G-S-TMSI of the terminal device modulo 1024.

Step 305a: The first radio access network device sends a second paging message.

The second paging message is obtained based on the first paging message. The second paging message indicates that at least one multicast session is activated. In other words, the second paging message indicates that the at least one multicast session is in an activated state or in an active state, or indicates that the at least one multicast session changes from an unactivated state to the activated state. This is uniformly described herein, and details are not described below. The at least one multicast session may be the same as the one or more multicast sessions in the first paging message, or may be a subset of the one or more multicast sessions in the first paging message. In another implementation method, the first radio access network device may receive one first paging message from the second radio access network device, and receive another first paging message from the core network device, then separately obtain identifiers of some multicast sessions from the two first paging messages, and generate the second paging message based on the obtained identifiers of the multicast sessions.

In a possible manner, the second paging message further indicates a terminal device in an RRC connected state to receive the at least one multicast session. In other words, the terminal device in the RRC connected state can receive the at least one multicast session, and a terminal device in an RRC non-connected state cannot receive the at least one multicast session. Alternatively, it may be understood as that the at least one multicast session is a multicast session provided for the terminal device in the RRC connected state. Alternatively, it may be understood as that the at least one multicast session is a multicast session received by the terminal device in the RRC connected state. For example, the second paging message includes a first multicast session identifier list, the first multicast session identifier list indicates an identifier of at least one activated multicast session, and the multicast session indicated by the first multicast session identifier list is a multicast session received in the RRC connected state.

In another possible manner, the second paging message further indicates that the at least one multicast session is a multicast session received by a terminal device in an RRC connected state or an RRC non-connected state. In other words, the second paging message further indicates whether each of the at least one multicast session is received by the terminal device in the RRC connected state or received by the terminal device in the RRC non-connected state. For example, the second paging message includes a second multicast session identifier list, and the second multicast session identifier list includes an identifier of at least one activated multicast session and indication information corresponding to each multicast session. The indication information indicates that the multicast session is a multicast session received in the RRC connected state or the RRC non-connected state. The RRC non-connected state may be the RRC inactive state and/or an RRC idle state. For example, the indication information is 1-bit information. When the indication information is 1, it indicates that the multicast session is a multicast session received in the RRC connected state. When the indication information is 0, it indicates that the multicast session is a multicast session received in the RRC non-connected state. It is assumed that the second multicast session identifier list includes an identifier of a multicast session 1, an identifier of a multicast session 2, indication information corresponding to the multicast session 1, and indication information corresponding to the multicast session 2, the indication information corresponding to the multicast session 1 is 0, and the indication information corresponding to the multicast session 2 is 1. In this case, the multicast session 1 is received by a terminal device in the RRC non-connected state, and the multicast session 2 is received by a terminal device in the RRC connected state. In addition, whether indication information is included may alternatively be used to indicate whether a multicast session is a multicast session received in the RRC connected state or the RRC non-connected state. For example, when the second multicast session identifier list includes an identifier of a multicast session 1 and indication information corresponding to the multicast session 1, it indicates that the multicast session 1 is a multicast session received in the RRC non-connected state. When the second multicast session identifier list includes an identifier of a multicast session 1, it indicates that the multicast session 1 is a multicast session received in the RRC connected state.

Because the first radio access network device does not have the full terminal device context, after receiving the first paging message, the first radio access network device does not know which terminal device joins or wants to receive the activated multicast session indicated in the first paging message. Therefore, the first radio access network device may send the first paging message to notify the terminal device that the multicast session is activated. When the second paging message includes the information used to page the terminal device (for example, the information used to determine the paging occasion), the first radio access network device determines, based on the second paging message, a location for sending the first paging message. When the second paging message does not include the information used to page the terminal device, the first radio access network device sends the first paging message on all paging occasions (paging occasion) in at least one default paging periodicity.

In this scenario, when the first radio access network device expects the terminal device to enter the RRC connected state to receive the activated multicast session, because the first radio access network device cannot determine whether the terminal device in a process of SDT is a terminal device that joins or wants to receive the activated multicast session, the first radio access network device cannot directly send an RRC resume message to the terminal device to indicate the terminal device to enter the RRC connected state. Herein, the terminal device and/or the first radio access network device may support multicast in the RRC inactive state, or may support only multicast in the RRC connected state. This is not limited in the present invention.

Step 306a: The first terminal device sends indication information to the first radio access network device.

The first terminal device performs paging monitoring, and if the first terminal device receives the second paging message, and the second paging message indicates that at least one multicast session that the first terminal device joins is activated, the first terminal device sends the indication information to the first radio access network device, where the indication information includes a non-small data transmission data indication and/or a multicast cause value. The multicast cause value is also referred to as a cause value of multicast, or a multicast-related cause value. The multicast cause value may also be understood as a multicast-related RRC resume cause value.

Specifically, the non-small data transmission data indication (nonSDT-DataIndication) indicates that in the process of small data transmission, data and/or signaling arrive/arrives on a radio bearer for non-small data transmission. That data and/or signaling arrive/arrives may be understood as that uplink data and/or signaling arrive/arrives or are/is about to arrive at the first terminal device, or may be understood as that downlink data and/or signaling arrive/arrives or are/is about to arrive at the first terminal device.

Specifically, the multicast cause value may indicate that the at least one multicast session includes the multicast session that the first terminal device joins, or the multicast session that the first terminal device joins is activated, or the first terminal device enters the RRC connected state to receive multicast. The multicast cause value may alternatively be a multicast-related access type, for example, MBS-access.

For example, the indication information may be user assistance information (UE assistant information, UAI) or information carried in the UAI.

The first terminal device is in the process of SDT.

Step 307a: The first radio access network device sends a context request message to the second radio access network device based on the indication information.

After receiving the indication information, the first radio access network device determines that the multicast session of the first terminal device is activated, in other words, the first terminal device expects to enter the RRC connected state to receive the activated multicast session. Therefore, the first radio access network device sends the context request message to the second radio access network device, to request the full context of the first terminal device.

Step 308a: The second radio access network device sends the terminal device context of the first terminal device to the first radio access network device.

The terminal device context is the full context (full UE context) of the terminal device.

For example, the terminal device context is carried in a context response message and sent to the first radio access network device. The context response message is also referred to as a retrieve UE context response (RETRIEVE UE CONTEXT RESPONSE) message, a context retrieve response message, a retrieve response message, or the like. This is uniformly described herein, and details are not described below again.

Step 309a: The first radio access network device sends an RRC resume message to the first terminal device.

The RRC resume message is used to resume an RRC connection of the first terminal device.

In the foregoing solution, when the first terminal device performs small data transmission, if the first terminal device receives the second paging message that indicates that the one or more specific multicast sessions that the first terminal device joins are activated and indicates that the multicast session is received in the RRC connected state, the first terminal device sends the indication information to the first radio access network device, so that the first radio access network device determines that the first terminal device is a terminal device that expects to enter the RRC connected state to receive the activated multicast session, and indicates the first terminal device to resume the RRC connected state after retrieving the full context of the terminal device from a last serving access network device (the second radio access network device). In this way, unnecessary signaling overheads can be avoided, and the first terminal device can enter the RRC connected state more quickly to start to receive the multicast session.

FIG. 3(b) is a schematic flowchart of a wireless communication method according to an embodiment of this application. The method includes the following steps.

Step 301b: A first terminal device sends an RRC resume request message to a first radio access network device.

The RRC resume request message is used to trigger SDT.

For example, the RRC resume request message is carried in a random access message 3 (MSG 3) or a random access message A (MSG A) sent by the first terminal device.

It should be noted that a name of the RRC resume request message may also change, for example, may be referred to as an RRC message or an RRC request message.

The first terminal device supports receiving of a multicast service in an RRC inactive state, and the first terminal device joins one or more multicast sessions.

Step 302b: The first radio access network device sends a context request message to a second radio access network device.

The context request message is used to request to obtain a context of the first terminal device for small data transmission. In a possible implementation, the context request message includes a small data transmission indication field.

Step 303b: The second radio access network device sends a partial context of the first terminal device to the first radio access network device, where the partial context includes a small data transmission context and a multicast-related context.

The small data transmission context and the multicast-related context of the first terminal device are a part of content in a terminal device context of the first terminal device, and the terminal device context is also referred to as a full context of the first terminal device.

The multicast-related context may be an identifier of the multicast session that the first terminal device joins, or may include the identifier of the multicast session that the first terminal device joins, and optionally further include a point-to-multipoint (point-to-multipoint, PTM) configuration of the multicast session.

Step 304b: The first radio access network device receives a first paging message.

The first paging message is from the second radio access network device or a core network device.

The first paging message includes identifiers of one or more multicast sessions, and the first paging message is used to notify that the one or more multicast sessions are activated. The one or more multicast sessions are activated multicast sessions or a subset of activated multicast sessions.

Step 305b: The first radio access network device sends a second paging message to the first terminal device.

Because the first radio access network device obtains the multicast-related context of the first terminal device, the first radio access network device knows the multicast session that the first terminal device joins. If the identifiers of the one or more multicast sessions in the first paging message include an identifier of the multicast session that the first terminal device joins, the second paging message is sent to the first terminal device, where the second paging message indicates that at least one multicast session is activated, and the at least one multicast session includes the multicast session that the first terminal device joins.

The second paging message is determined based on the first paging message, or it is understood as that the second paging message is triggered by the first paging message. The second paging message may be the same as or different from the first paging message.

Step 306b: The first radio access network device sends a context request message to the second radio access network device.

If the first radio access network device determines that the at least one activated multicast session includes the multicast session that the first terminal device joins, the first radio access network device sends the context request message to the second radio access network device, to request the full context of the first terminal device.

Step 307b: The second radio access network device sends the terminal device context of the first terminal device to the first radio access network device.

The terminal device context is the full context of the first terminal device.

For example, the terminal device context is carried in a context response message and sent to the first radio access network device.

Step 308b: The first radio access network device sends an RRC resume message to the first terminal device.

The RRC resume message is used to resume an RRC connection of the first terminal device.

In the foregoing solution, in an SDT scenario without context relocation, the partial context sent by the second radio access network device to the first radio access network device further includes the multicast-related context. The first radio access network device can determine, based on the multicast-related context, that one or more specific multicast sessions that the first terminal device joins are activated. Therefore, when the first radio access network device expects the first terminal device to enter an RRC connected state to receive the activated multicast session, the first radio access network device indicates the first terminal device to resume the RRC connected state after retrieving the full terminal device context from a last serving access network device (the second radio access network device). In this way, unnecessary signaling overheads can be avoided, and the first terminal device can enter the RRC connected state more quickly to start to receive the multicast session.

FIG. 3(c) is a schematic flowchart of a wireless communication method according to an embodiment of this application. The method includes the following steps.

Step 301c to step 306c are the same as step 301a to step 306a in the embodiment of FIG. 3(a).

Step 307c: The first radio access network device sends a context confirm message to the second radio access network device based on the indication information.

After receiving the indication information, the first radio access network device determines that the multicast session of the first terminal device is activated, in other words, the identifier of the at least one multicast session in the second paging message includes an identifier of the multicast session that the first terminal device joins. Therefore, the first radio access network device sends the context confirm message to the second radio access network device, to request to end small data transmission of the first terminal device.

The context confirm message is also referred to as a retrieve UE context confirm (RETRIEVE UE CONTEXT CONFIRM) message, a context retrieve confirm message, a retrieve confirm message, or another name.

Step 308c: The second radio access network device sends a context failure message to the first radio access network device.

The context failure message is also referred to as a retrieve UE context failure (RETRIEVE UE CONTEXT FAILURE) message, a context retrieve failure message, a retrieve failure message, or another name.

The context failure message is used to end small data transmission of the first terminal device.

The context failure message includes an encapsulated RRC release message, and indicates to release the first terminal device to the RRC inactive state or the RRC idle state.

Step 309c: The first radio access network device sends the RRC release message to the first terminal device.

The first terminal device is released to the RRC inactive state or the RRC idle state based on the RRC release message.

Step 310c: The first terminal device sends an RRC resume request message or an RRC setup request message to the first radio access network device.

The RRC resume request message indicates to enter (or resume) the RRC connected state.

The RRC setup request message is used to request to set up an RRC connection.

Step 311c: The first radio access network device sends an RRC resume message to the first terminal device.

The RRC resume message is used to resume an RRC connection of the first terminal device.

The first terminal device receives the RRC resume message, and enters the RRC connected state.

Before the first radio access network device sends the RRC resume message to the first terminal device, the first radio access network device obtains the context of the first terminal device from the second radio access network device.

In the foregoing solution, in a process of small data transmission without context relocation, if one or more specific multicast sessions that the first terminal device joins are activated, and the first radio access network device indicates to enter the RRC connected state to receive the activated multicast session, an existing non-SDT data arrival procedure may be reused on a radio access network device side, and SDT is first ended and then the terminal device enters the RRC connected state. This is compatible with the existing procedure.

FIG. 3(d) is a schematic flowchart of a wireless communication method according to an embodiment of this application. The method includes the following steps.

Step 301d to step 305d are the same as step 301b to step 305b in the embodiment of FIG. 3(b).

Step 306d to step 310d are the same as step 307c to step 311c in the embodiment of FIG. 3(c).

In the foregoing solution, in a process of small data transmission without context relocation, if one or more specific multicast sessions that the first terminal device joins are activated, and the first radio access network device indicates to enter the RRC connected state to receive the activated multicast session, an existing non-SDT data arrival procedure may be reused on a radio access network device side, and SDT is first ended and then the terminal device enters the RRC connected state. This is compatible with the existing procedure.

FIG. 3(e) is a schematic flowchart of a wireless communication method according to an embodiment of this application. The method includes the following steps.

Step 301e to step 303e are the same as step 301a to step 303a in the embodiment of FIG. 3(a). Step 304e: The second radio access network device sends the terminal device context of the first terminal device to the first radio access network device.

If the second radio access network device determines that at least one multicast session is activated, and determines that a terminal device that joins the at least one multicast session includes the first terminal device, the second radio access network device sends the terminal device context of the first terminal device to the first radio access network device.

The terminal device context of the first terminal device is also referred to as the full context of the first terminal device.

Optionally, the terminal device context of the first terminal device includes a multicast-related context of the first terminal device. The multicast-related context may be an identifier of the multicast session that the first terminal device joins, or may include the identifier of the multicast session that the first terminal device joins, and optionally further include a PTM configuration of the multicast session.

Step 305e: The first radio access network device receives a first paging message.

The first paging message is from the second radio access network device or a core network device.

The first paging message includes identifiers of one or more multicast sessions, and the first paging message is used to notify that the one or more multicast sessions are activated. The one or more multicast sessions are activated multicast sessions or a subset of activated multicast sessions.

A sequence between step 304e and step 305e is not limited.

Step 306e: The first radio access network device sends a second paging message to the first terminal device.

This step is an optional step.

Because the first radio access network device obtains the terminal device context of the first terminal device, the first radio access network device determines, based on the first paging message and the terminal device context of the first terminal device, that one or more specific multicast sessions that the first terminal device joins are activated, and sends the second paging message to the first terminal device. The second paging message indicates the first terminal device to enter an RRC connected state to receive the multicast service.

The second paging message may be the same as or different from the first paging message.

Step 307e: The first radio access network device sends an RRC resume message to the first terminal device.

The RRC resume message is used to resume an RRC connection of the first terminal device.

In an implementation method, step 307e may also be replaced with step 308d to step 310d in the embodiment of FIG. 3(d).

In the foregoing solution, it can be avoided that partial context transmission triggered by SDT unnecessarily includes the multicast-related context, because a multicast session received by the terminal device is not necessarily activated in a process of SDT. In this way, signaling overheads on an interface between radio access network devices can be reduced. In an SDT scenario without context relocation, because the second radio access network device is a network device that stores the full context of the terminal device, the second radio access network device may send the terminal device context of the first terminal device to the first radio access network device when determining that at least one multicast session in a multicast session that the first terminal device joins or wants to receive is activated. In this way, signaling overheads are reduced, and storage overheads of the first radio access network device are reduced.

FIG. 3(f) is a schematic flowchart of a wireless communication method according to an embodiment of this application. The method includes the following steps.

Step 301f: A first terminal device sends an RRC resume request message to a first radio access network device.

The RRC resume request message is used to trigger SDT.

For example, the RRC resume request message is carried in a random access message 3 (MSG 3) or a random access message A (MSG A) sent by the first terminal device.

It should be noted that a name of the RRC resume request message may also change, for example, may be referred to as an RRC message or an RRC request message.

The first terminal device supports receiving of a multicast service in an RRC inactive state, and the first terminal device joins one or more multicast sessions.

Step 302f: The first radio access network device sends a context request message to a second radio access network device.

The context request message is used to obtain a context of the first terminal device.

Step 303f: The second radio access network device sends a terminal device context of the first terminal device to the first radio access network device.

The terminal device context of the first terminal device is also referred to as a full context of the first terminal device.

The terminal device context includes a multicast-related context. The multicast-related context may be an identifier of the multicast session that the first terminal device joins, or may include the identifier of the multicast session that the first terminal device joins, and optionally further include a PTM configuration of the multicast session.

Step 304f: The first radio access network device receives a first paging message.

The first paging message is from the second radio access network device or a core network device.

The first paging message includes identifiers of one or more multicast sessions, and the first paging message indicates a terminal device that joins the one or more multicast sessions to enter an RRC connected state to receive multicast. The one or more multicast sessions are activated multicast sessions or a subset of activated multicast sessions.

Step 305f: The first radio access network device sends an RRC resume message to the first terminal device.

The RRC resume message is used to resume an RRC connection of the first terminal device.

The first radio access network device determines, based on the multicast-related context of the first terminal device and the first paging message, that the multicast session that the first terminal device joins is activated, and sends the RRC resume message to the first terminal device.

In an implementation method, step 305f may also be replaced with step 308d to step 310d in the embodiment of FIG. 3(d).

In the foregoing solution, in a process of small data transmission with context relocation, if one or more specific multicast sessions that the first terminal device joins are activated, and the first radio access network device indicates to enter the RRC connected state to receive the activated multicast session, the first terminal device is triggered to enter the RRC connected state, so that the first terminal device correctly receives a multicast service of the multicast session.

In another embodiment, if the first terminal device supports receiving of multicast (or a multicast service) in the RRC inactive state, in other words, the first terminal device joins a multicast session, if the first terminal device receives a paging message during small data transmission, and the paging message indicates the first terminal device to maintain in the RRC inactive state to receive the multicast service, the first terminal device maintains in the RRC inactive state based on the paging message, and receives the multicast service in the RRC inactive state.

It may be understood that to implement functions in the foregoing embodiments, the terminal device (or the first terminal device) includes corresponding hardware structures and/or software modules for performing various functions. A person skilled in the art should easily be aware that, in combination with the units and the method steps in the examples described in embodiments disclosed in this application, this application can be implemented by hardware or a combination of hardware and computer software. Whether a function is performed by hardware or hardware driven by computer software depends on particular application scenarios and design constraints of the technical solutions.

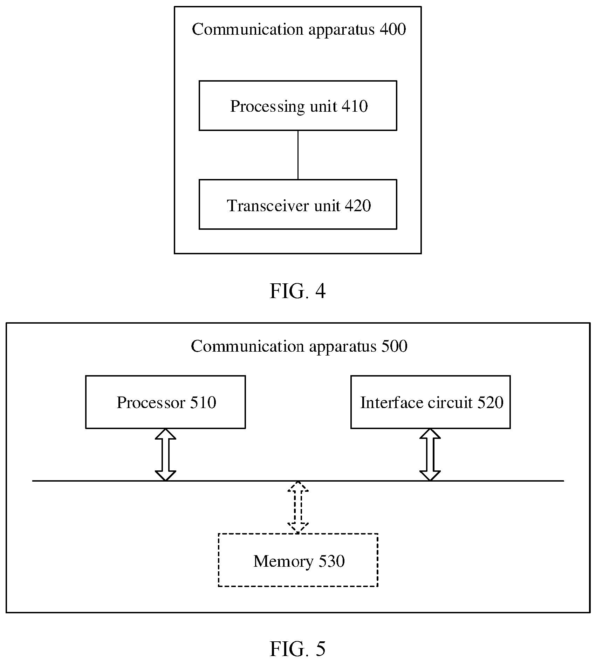

FIG. 4 and FIG. 5 are diagrams of structures of possible communication apparatuses according to embodiments of this application. These communication apparatuses may be configured to implement functions of the terminal device in the foregoing method embodiments. Therefore, beneficial effect of the foregoing method embodiments can also be implemented. In embodiments of this application, the communication apparatus may be one of the terminal devices 120a to 120j shown in FIG. 1, or may be a module (for example, a chip) used in the terminal device.

The communication apparatus 400 shown in FIG. 4 includes a processing unit 410 and a transceiver unit 420. The communication apparatus 400 is configured to implement functions of the terminal device in the foregoing method embodiments.

When the communication apparatus 400 is configured to implement functions of the first terminal device in the foregoing method embodiments: The transceiver unit 420 is configured to receive a paging message, where the paging message includes identification information of at least one multicast session, and the first terminal device is in an RRC inactive state. The processing unit 410 is configured to: when a first condition is met, trigger an RRC connection resume procedure. The first condition includes: the at least one multicast session includes a multicast session that the first terminal device joins, and the first terminal device is not in a process of small data transmission. Alternatively, the first condition includes: the paging message further includes identification information of at least one terminal device, the at least one multicast session includes a multicast session that the first terminal device joins, the terminal device is not in a process of small data transmission, and the identification information of the at least one terminal device does not include identification information of the first terminal device. The small data transmission is data and/or signaling transmission that is performed by the first terminal device in the RRC inactive state and in which a data volume is less than a preset threshold.

In a possible implementation method, the processing unit 410 is configured to send an RRC resume request message to a radio access network device through the transceiver unit 420.

In a possible implementation method, the processing unit 410 is further configured to: when a second condition is met, determine not to trigger the RRC connection resume procedure. The second condition includes: the at least one multicast session includes the multicast session that the first terminal device joins, and the first terminal device is in the process of small data transmission.

In a possible implementation method, the transceiver unit 420 is further configured to send indication information to the radio access network device, where the indication information indicates that data and/or signaling arrive/arrives on a radio bearer for non-small data transmission, the at least one multicast session includes the multicast session that the first terminal device joins, or the multicast session that the first terminal device joins has been activated.

In a possible implementation method, the processing unit 410 is further configured to: when a third condition is met, enter an RRC idle state, and trigger an RRC connection setup procedure. The third condition includes: the paging message further includes the identification information of the at least one terminal device, the at least one multicast session includes the multicast session that the first terminal device joins, the terminal device is not in the process of small data transmission, and the identification information of the at least one terminal device includes the identification information of the first terminal device.

When the communication apparatus 400 is configured to implement functions of the terminal device in the foregoing method embodiments: The processing unit 410 is used by the terminal device to determine, based on a status of small data transmission, whether to monitor a paging message used for group notification, where the terminal device is in an RRC inactive state, and the paging message includes identification information of at least one multicast session. The terminal device joins one or more multicast sessions, and the small data transmission is data and/or signaling transmission that is performed by the first terminal device in the RRC inactive state and in which a data volume is less than a preset threshold.

In a possible implementation method, the processing unit 410 is specifically configured to monitor the paging message when the terminal device is not performing small data transmission.

In a possible implementation method, the processing unit 410 is specifically configured to skip monitoring the paging message when the terminal device is performing small data transmission.

In a possible implementation method, the processing unit 410 is specifically configured to skip monitoring the paging message when the terminal device is performing small data transmission, and the terminal device does not support receiving of a multicast session in the RRC inactive state.

In a possible implementation method, the transceiver unit 420 is configured to: receive an RRC message, where the RRC message includes the identification information of the at least one multicast session, and the RRC message indicates that the at least one multicast session has been activated; and when the at least one multicast session includes the multicast session that the terminal device joins, receive, by the terminal device in the RRC inactive state, the multicast session that the terminal device joins.

In a possible implementation method, the processing unit 410 is specifically configured to monitor the paging message when the terminal device is performing small data transmission, and the terminal device supports receiving of a multicast session in the RRC inactive state.

In a possible implementation method, the processing unit 410 is specifically configured to monitor the paging message when the terminal device is performing small data transmission, the terminal device supports receiving of a multicast session in the RRC inactive state, and a cell on which the terminal device camps supports providing a multicast session for a terminal device in the inactive state.

When the communication apparatus 400 is configured to implement functions of the terminal device in the foregoing method embodiments: The transceiver unit 420 is configured to receive a first message, where the first message includes identification information of at least one multicast session, and the terminal device is in an RRC inactive state. The processing unit 410 is configured to: when the at least one multicast session includes a multicast session that the terminal device joins, and the terminal device is in a process of small data transmission, enter an RRC idle state, and trigger an RRC connection setup procedure. The small data transmission is data and/or signaling transmission that is performed by the terminal device in the RRC inactive state and in which a data volume is less than a preset threshold.

In a possible implementation method, the first message is an RRC message or a paging message.

When the communication apparatus 400 is configured to implement functions of the first radio access network device in the foregoing method embodiments: The processing unit 410 is configured to control the transceiver unit 420 to send a second paging message, where the second paging message indicates that at least one multicast session is activated; and receive indication information from a first terminal device, where the indication information includes a non-small data transmission data indication and/or a multicast cause value, the at least one multicast session includes a multicast session that the first terminal device joins, the first terminal device is in a radio resource control RRC inactive state and is in a process of small data transmission, and the first radio access network device is a serving radio access network device of the first terminal device.

In a possible implementation method, the processing unit 410 is further configured to: after controlling the transceiver unit 420 to receive the indication information from the first terminal device, send an RRC resume message to the first terminal device, where the RRC resume message is used to resume an RRC connection of the first terminal device.

In a possible implementation method, the processing unit 410 is further configured to: before controlling the transceiver unit 420 to send the RRC resume message to the first terminal device, send an RRC release message to the first terminal device, where the RRC release message indicates the first terminal device to enter the RRC inactive state or an RRC idle state; and receive, by the first radio access network device, an RRC resume request message from the first terminal device, where the RRC resume request message is used to request to enter an RRC connected state; or receive an RRC setup request message from the first terminal device, where the RRC setup request message is used to request to set up an RRC connection.

In a possible implementation method, the second paging message further indicates a terminal device in the RRC connected state to receive the at least one multicast session. Alternatively, the second paging message further indicates that the at least one multicast session is a multicast session received by a terminal device in the RRC connected state or an RRC non-connected state.

In a possible implementation method, the processing unit 410 is further configured to: before controlling the transceiver unit 420 to send the second paging message, receive a first paging message, where the first paging message is used to notify that one or more multicast sessions are activated; and determine the second paging message based on the first paging message.

In a possible implementation method, that the processing unit 410 is configured to control the transceiver unit 420 to receive the first paging message specifically includes: The processing unit 410 is configured to receive the first paging message from a second radio access network device or a core network device, where the second radio access network device is a last serving radio access network device of the first terminal device in the RRC connected state.

In a possible implementation method, the first paging message further includes information used to page a terminal device. That the processing unit 410 is further configured to control the transceiver unit 420 to send the second paging message specifically includes: The processing unit 410 is configured to send the second paging message based on the information used to page the terminal device.

In a possible implementation method, the multicast cause value indicates that the at least one multicast session includes the multicast session that the first terminal device joins, or indicates that the multicast session that the first terminal device joins is activated, or indicates that the first terminal device enters the RRC connected state to receive multicast.

In a possible implementation method, the processing unit 410 is further configured to: after controlling the transceiver unit 420 to receive the indication information from the first terminal device, send a context request message to the second radio access network device, where the context request message is used to request a terminal device context of the first terminal device, and the second radio access network device is the last serving radio access network device of the first terminal device in the RRC connected state; and receive the terminal device context of the first terminal device from the second radio access network device.

When the communication apparatus 400 is configured to implement functions of the first radio access network device in the foregoing method embodiments: The transceiver unit 420 is configured to receive a first paging message, where the first paging message includes identifiers of one or more multicast sessions, the first paging message is used to notify that the one or more multicast sessions are activated, the first radio access network device is a serving radio access network device of a first terminal device, and the first terminal device is in a radio resource control RRC inactive state and is in a process of small data transmission. The processing unit 410 is configured to obtain a multicast-related context of the first terminal device, where the multicast-related context includes an identifier of a multicast session that the first terminal device joins. The transceiver unit 420 is further configured to send an RRC resume message to the first terminal device, where the identifiers of the one or more multicast sessions include the identifier of the multicast session that the first terminal device joins, and the RRC resume message is used to resume an RRC connection of the first terminal device.

In a possible implementation method, the processing unit 410 is further configured to: before the transceiver unit 420 sends the RRC resume message to the first terminal device, determine a second paging message based on the first paging message, where the second paging message indicates that at least one multicast session is activated, and the at least one multicast session includes the multicast session that the first terminal device joins. The transceiver unit 420 is further configured to send the second paging message.

In a possible implementation method, the transceiver unit 420 is further configured to: before sending the RRC resume message to the first terminal device, send an RRC release message to the first terminal device, where the RRC release message indicates the first terminal device to enter the RRC inactive state or an RRC idle state; and receive an RRC resume request message from the first terminal device, where the RRC resume request message is used to request to enter an RRC connected state; or receive an RRC setup request message from the first terminal device, where the RRC setup request message is used to request to set up an RRC connection.

In a possible implementation method, that the transceiver unit 420 is configured to receive a first paging message specifically includes: The transceiver unit 420 is configured to receive the first paging message from a second radio access network device or a core network device, where the second radio access network device is a last serving radio access network device of the first terminal device in the RRC connected state.

In a possible implementation method, that the processing unit 410 is configured to obtain a multicast-related context of the first terminal device specifically includes: The processing unit 410 is configured to: send a first context request message to the second radio access network device through the transceiver unit 420, where the first context request message is used to request to obtain a context of the first terminal device to perform small data transmission; and receive a partial context of the first terminal device from the second radio access network device, where the partial context of the first terminal device includes a small data transmission-related context and the multicast-related context, and the second radio access network device is the last serving radio access network device of the first terminal device in the RRC connected state.

In a possible implementation method, the transceiver unit 420 is further configured to: send a second context request message to the second radio access network device, where the second context request message is used to request to obtain a context of the first terminal device; and receive a terminal device context of the first terminal device from the second radio access network device.

In a possible implementation method, that the processing unit 410 is configured to obtain a multicast-related context of the first terminal device specifically includes: The processing unit 410 is configured to receive a terminal device context of the first terminal device from the second radio access network device through the transceiver unit 420, where the terminal device context includes the multicast-related context, and the second radio access network device is the last serving radio access network device of the first terminal device in the RRC connected state.

When the communication apparatus 400 is configured to implement functions of the second radio access network device in the foregoing method embodiments: The processing unit 410 is configured to determine whether identifiers of one or more activated multicast sessions include an identifier of a multicast session that a first terminal device joins. The transceiver unit 420 is configured to: when the identifiers of the one or more activated multicast sessions include the identifier of the multicast session that the first terminal device joins, send a terminal device context of the first terminal device to a first radio access network device. The first terminal device is in a radio resource control RRC inactive state and is in a process of small data transmission, the first radio access network device is a serving radio access network device of the first terminal device, and the second radio access network device is a last serving radio access network device of the first terminal device in an RRC connected state.

In a possible implementation method, the terminal device context includes a multicast-related context of the first terminal device.

In a possible implementation method, the transceiver unit 420 is further configured to: before sending the terminal device context of the first terminal device to the first radio access network device, receive a context request message from the first radio access network device, where the context request message is used to request to obtain a context of the terminal device to perform small data transmission; and send a partial context of the first terminal device to the first radio access network device, where the partial context of the first terminal device includes a small data transmission-related context.

In a possible implementation method, the method further includes: The second radio access network device sends a first paging message to the first radio access network device, where the first paging message is used to notify that the one or more multicast sessions are activated.

In a possible implementation method, the first paging message includes the identifiers of the one or more multicast sessions.

When the communication apparatus 400 is configured to implement functions of the first terminal device in the foregoing method embodiments: The processing unit 410 is configured to: control the transceiver unit 420 to receive a second paging message from a first radio access network device, where the second paging message indicates that at least one multicast session is activated; and send indication information to the first radio access network device, where the indication information includes a non-small data transmission data indication and/or a multicast cause value, the at least one multicast session includes a multicast session that the first terminal device joins, the first terminal device is in a radio resource control RRC inactive state and is in a process of small data transmission, and the first radio access network device is a serving radio access network device of the first terminal device.

In a possible implementation method, the processing unit 410 is further configured to: after controlling the transceiver unit 420 to send the indication information to the first radio access network device, receive an RRC resume message from the first radio access network device, where the RRC resume message is used to resume an RRC connection of the first terminal device.

In a possible implementation method, the processing unit 410 is further configured to: before controlling the transceiver unit 420 to receive the RRC resume message from the first radio access network device, receive an RRC release message from the first radio access network device, where the RRC release message indicates the first terminal device to enter the RRC inactive state or an RRC idle state; and send an RRC resume request message to the first radio access network device, where the RRC resume request message is used to request to enter an RRC connected state; or send an RRC setup request message to the first radio access network device, where the RRC setup request message is used to request to set up an RRC connection.

In a possible implementation method, the second paging message further indicates a terminal device in the RRC connected state to receive the at least one multicast session. Alternatively, the second paging message further indicates that the at least one multicast session is a multicast session received by a terminal device in the RRC connected state or an RRC non-connected state.

In a possible implementation method, the multicast cause value indicates that the at least one multicast session includes the multicast session that the first terminal device j oins, or indicates that the multicast session that the first terminal device joins is activated, or indicates that the first terminal device enters the RRC connected state to receive multicast.

For more detailed descriptions about the processing unit 410 and the transceiver unit 420, directly refer to related descriptions in the foregoing method embodiments. Details are not described herein again.

As shown in FIG. 5, the communication apparatus 500 includes a processor 510 and an interface circuit 520. The processor 510 and the interface circuit 520 are coupled to each other. It may be understood that the interface circuit 520 may be a transceiver or an input/output interface. Optionally, the communication apparatus 500 may further include a memory 530, configured to: store instructions executed by the processor 510, or store input data required for running instructions by the processor 510, or store data generated after the processor 510 runs instructions.

When the communication apparatus 500 is configured to implement the foregoing method embodiments, the processor 510 is configured to implement a function of the processing unit 410, and the interface circuit 520 is configured to implement a function of the transceiver unit 420.

When the communication apparatus is a chip used in a terminal device, the chip in the terminal device implements the functions of the terminal device in the foregoing method embodiments. The chip in the terminal device receives information from another module (for example, a radio frequency module or an antenna) in the terminal device, where the information is sent by a radio access network device to the terminal device; or the chip in the terminal device sends information to another module (for example, a radio frequency module or an antenna) in the terminal device, where the information is sent by the terminal device to a radio access network device.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, and a compact disc read-only memory (compact disc read-only memory, CD-ROM), or any other form of storage medium well known in the art. For example, the storage medium is coupled to the processor, so that the processor can read information from the storage medium and write information into the storage medium. Certainly, the storage medium may alternatively be a component of the processor. The processor and the storage medium may be located in an ASIC. In addition, the ASIC may be located in a radio access network device or a terminal device. Certainly, the processor and the storage medium may alternatively exist as discrete components in a radio access network device or a terminal device.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. The computer program (English: Computer Program) is a set of instructions that indicate each step of an electronic computer or another device having a message processing capability, and is usually written in a program design language and runs on a target architecture. When the computer programs or instructions are loaded and executed on a computer, the procedures or functions in embodiments of this application are completely or partially performed. The computer may be a general-purpose computer, a dedicated computer, a computer network, a radio access network device, a terminal device, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile storage medium or a non-volatile storage medium, or may include both a volatile storage medium and a non-volatile storage medium.

In various embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and represents that three relationships may exist. For example, A and/or B may represent the following cases: Only A exists, both A and B exist, and only B exists, where A and B may be singular or plural. **In** text descriptions of this application, the character "/" usually represents an "or" relationship between associated objects. In a formula in this application, the character "/" represents a "division" relationship between the associated objects.

It may be understood that various numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes.

## Claims

1. A wireless communication method, comprising:
receiving, by a first terminal device, a paging message, wherein the paging message comprises identification information of at least one multicast session, and the first terminal device is in a radio resource control RRC inactive state; and
when a first condition is met, triggering, by the first terminal device, an RRC connection resume procedure, wherein
the first condition comprises: the at least one multicast session comprises a multicast session that the first terminal device joins, and the first terminal device is not in a process of small data transmission; or
the first condition comprises: the paging message further comprises identification information of at least one terminal device, the at least one multicast session comprises a multicast session that the first terminal device joins, the terminal device is not in a process of small data transmission, and the identification information of the at least one terminal device does not comprise identification information of the first terminal device; and
the small data transmission is data and/or signaling transmission that is performed by the first terminal device in the RRC inactive state and in which a data volume is less than a preset threshold.

2. The method according to claim 1, wherein the triggering, by the first terminal device, an RRC connection resume procedure comprises:
sending, by the first terminal device, an RRC resume request message to a radio access network device.

3. The method according to claim 1 or 2, wherein the method further comprises:
when a second condition is met, determining, by the first terminal device, not to trigger the RRC connection resume procedure, wherein
the second condition comprises: the at least one multicast session comprises the multicast session that the first terminal device joins, and the first terminal device is in the process of small data transmission.

4. The method according to any one of claims 1 to 3, wherein the method further comprises:
sending, by the first terminal device, indication information to the radio access network device, wherein the indication information indicates that data and/or signaling arrive/arrives on a radio bearer for non-small data transmission, or the at least one multicast session comprises the multicast session that the first terminal device joins.

5. The method according to any one of claims 1 to 4, wherein the method further comprises:
when a third condition is met, entering, by the first terminal device, an RRC idle state, and triggering an RRC connection setup procedure, wherein
the third condition comprises: the paging message further comprises the identification information of the at least one terminal device, the at least one multicast session comprises the multicast session that the first terminal device joins, the terminal device is not in the process of small data transmission, and the identification information of the at least one terminal device comprises the identification information of the first terminal device.

6. A wireless communication method, comprising:
determining, by a terminal device based on a status of small data transmission, whether to monitor a paging message used for group notification, wherein the terminal device is in a radio resource control RRC inactive state, and the paging message comprises identification information of at least one multicast session, wherein
the terminal device joins one or more multicast sessions, and the small data transmission is data and/or signaling transmission that is performed by the first terminal device in the RRC inactive state and in which a data volume is less than a preset threshold.

7. The method according to claim 6, wherein the determining, by a terminal device based on a status of small data transmission, whether to monitor a paging message used for group notification comprises:
monitoring, by the terminal device, the paging message when the terminal device is not performing small data transmission.

8. The method according to claim 6, wherein the determining, by a terminal device based on a status of small data transmission, whether to monitor a paging message used for group notification comprises:
skipping monitoring, by the terminal device, the paging message when the terminal device is performing small data transmission.

9. The method according to claim 8, wherein the skipping monitoring, by the terminal device, the paging message when the terminal device is performing small data transmission comprises:
skipping monitoring, by the terminal device, the paging message when the terminal device is performing small data transmission, and the terminal device does not support receiving of a multicast session in the RRC inactive state.

10. The method according to claim 8 or 9, wherein the method further comprises:
receiving, by the terminal device, an RRC message, wherein the RRC message comprises the identification information of the at least one multicast session, and the RRC message indicates that the at least one multicast session has been activated; and
when the at least one multicast session comprises the multicast session that the terminal device joins, receiving, by the terminal device in the RRC inactive state, the multicast session that the terminal device joins.

11. The method according to claim 6, wherein the determining, by a terminal device based on a status of small data transmission, whether to monitor a paging message used for group notification comprises:
monitoring, by the terminal device, the paging message when the terminal device is performing small data transmission, and the terminal device supports receiving of a multicast session in the RRC inactive state.

12. The method according to claim 11, wherein the monitoring, by the terminal device, the paging message when the terminal device is performing small data transmission, and the terminal device supports receiving of a multicast session in the RRC inactive state comprises:
monitoring, by the terminal device, the paging message when the terminal device is performing small data transmission, the terminal device supports receiving of a multicast session in the RRC inactive state, and a cell on which the terminal device camps supports providing a multicast session for a terminal device in the inactive state.

13. A wireless communication method, comprising:
receiving, by a terminal device, a first message, wherein the first message comprises identification information of at least one multicast session, and the terminal device is in a radio resource control RRC inactive state; and
when the at least one multicast session comprises a multicast session that the terminal device joins, and the terminal device is in a process of small data transmission, entering, by the terminal device, an RRC idle state, and triggering an RRC connection setup procedure, wherein
the small data transmission is data and/or signaling transmission that is performed by the terminal device in the RRC inactive state and in which a data volume is less than a preset threshold.

14. The method according to claim 13, wherein the first message is an RRC message or a paging message.

15. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement, through a logic circuit or by executing code instructions, the method according to any one of claims 1 to 5, the method according to any one of claims 6 to 12, or the method according to claim 13 or 14.

16. A communication system, comprising a first terminal device and a radio access network device, wherein
the first terminal device is configured to: receive a paging message, wherein the paging message comprises identification information of at least one multicast session, and the first terminal device is in a radio resource control RRC inactive state; and when a first condition is met, trigger an RRC connection resume procedure; and
the radio access network device is configured to send an RRC resume message to the first terminal device, wherein the RRC resume message is used to trigger the first terminal device to enter an RRC connected state, wherein
the first condition comprises: the at least one multicast session comprises a multicast session that the first terminal device joins, and the first terminal device is not in a process of small data transmission; or
the first condition comprises: the paging message further comprises identification information of at least one terminal device, the at least one multicast session comprises a multicast session that the first terminal device joins, the terminal device is not in a process of small data transmission, and the identification information of the at least one terminal device does not comprise identification information of the first terminal device; and
the small data transmission is data and/or signaling transmission that is performed by the first terminal device in the RRC inactive state and in which a data volume is less than a preset threshold.

17. The system according to claim 16, wherein the first terminal device is specifically configured to send an RRC resume request message to the radio access network device.

18. The system according to claim 16 or 17, wherein the first terminal device is further configured to: when a second condition is met, determine not to trigger the RRC connection resume procedure, wherein
the second condition comprises: the at least one multicast session comprises the multicast session that the first terminal device joins, and the first terminal device is in the process of small data transmission.

19. The system according to any one of claims 16 to 18, wherein the first terminal device is further configured to send indication information to the radio access network device, wherein the indication information indicates that data and/or signaling arrive/arrives on a radio bearer for non-small data transmission, or the at least one multicast session comprises the multicast session that the first terminal device joins.

20. The system according to any one of claims 16 to 19, wherein the first terminal device is further configured to: when a third condition is met, enter an RRC idle state, and trigger an RRC connection setup procedure, wherein
the third condition comprises: the paging message further comprises the identification information of the at least one terminal device, the at least one multicast session comprises the multicast session that the first terminal device joins, the terminal device is not in the process of small data transmission, and the identification information of the at least one terminal device comprises the identification information of the first terminal device.

21. A communication system, comprising a terminal device and a radio access network device, wherein
the radio access network device is configured to send a first message to the terminal device, wherein the first message comprises identification information of at least one multicast session, and the terminal device is in a radio resource control RRC inactive state; and
the terminal device is configured to: when the at least one multicast session comprises a multicast session that the terminal device joins, and the terminal device is in a process of small data transmission, enter an RRC idle state, and trigger an RRC connection setup procedure, wherein
the small data transmission is data and/or signaling transmission that is performed by the terminal device in the RRC inactive state and in which a data volume is less than a preset threshold.

22. The system according to claim 21, wherein the first message is an RRC message or a paging message.

23. A wireless communication method, comprising:
sending, by a first radio access network device, a second paging message, wherein the second paging message indicates that at least one multicast session is activated; and
receiving, by the first radio access network device, indication information from a first terminal device, wherein the indication information comprises a non-small data transmission data indication and/or a multicast cause value, the at least one multicast session comprises a multicast session that the first terminal device joins, the first terminal device is in a radio resource control RRC inactive state and is in a process of small data transmission, and the first radio access network device is a serving radio access network device of the first terminal device.

24. The method according to claim 23, wherein after the receiving, by the first radio access network device, indication information from a first terminal device, the method further comprises:
sending, by the first radio access network device, an RRC resume message to the first terminal device, wherein the RRC resume message is used to resume an RRC connection of the first terminal device.

25. The method according to claim 24, wherein before the sending, by the first radio access network device, an RRC resume message to the first terminal device, the method further comprises:
sending, by the first radio access network device, an RRC release message to the first terminal device, wherein the RRC release message indicates the first terminal device to enter the RRC inactive state or an RRC idle state; and
receiving, by the first radio access network device, an RRC resume request message from the first terminal device, wherein the RRC resume request message is used to request to enter an RRC connected state; or receiving, by the first radio access network device, an RRC setup request message from the first terminal device, wherein the RRC setup request message is used to request to set up an RRC connection.

26. The method according to any one of claims 23 to 25, wherein the second paging message further indicates a terminal device in the RRC connected state to receive the at least one multicast session; or
the second paging message further indicates that the at least one multicast session is a multicast session received by a terminal device in the RRC connected state or an RRC non-connected state.

27. The method according to any one of claims 23 to 26, wherein before the sending, by a first radio access network device, a second paging message, the method further comprises:
receiving, by the first radio access network device, a first paging message, wherein the first paging message is used to notify that one or more multicast sessions are activated; and
determining the second paging message based on the first paging message.

28. The method according to claim 27, wherein the receiving, by the first radio access network device, a first paging message comprises:
receiving, by the first radio access network device, the first paging message from a second radio access network device or a core network device, wherein the second radio access network device is a last serving radio access network device of the first terminal device in the RRC connected state.

29. The method according to claim 27 or 28, wherein the first paging message further comprises information used to page a terminal device; and
the sending, by a first radio access network device, a second paging message comprises:
sending, by the first radio access network device, the second paging message based on the information used to page the terminal device.

30. The method according to any one of claims 23 to 29, wherein
the multicast cause value indicates that the at least one multicast session comprises the multicast session that the first terminal device joins, or indicates that the multicast session that the first terminal device joins is activated, or indicates that the first terminal device enters the RRC connected state to receive multicast.

31. The method according to any one of claims 23 to 30, wherein after the receiving, by the first radio access network device, indication information from a first terminal device, the method further comprises:
sending, by the first radio access network device, a context request message to the second radio access network device, wherein the context request message is used to request a terminal device context of the first terminal device, and the second radio access network device is the last serving radio access network device of the first terminal device in the RRC connected state; and
receiving, by the first radio access network device, the terminal device context of the first terminal device from the second radio access network device.

32. A wireless communication method, comprising:
receiving, by a first radio access network device, a first paging message, wherein the first paging message comprises identifiers of one or more multicast sessions, the first paging message is used to notify that the one or more multicast sessions are activated, the first radio access network device is a serving radio access network device of a first terminal device, and the first terminal device is in a radio resource control RRC inactive state and is in a process of small data transmission;
obtaining, by the first radio access network device, a multicast-related context of the first terminal device, wherein the multicast-related context comprises an identifier of a multicast session that the first terminal device joins; and
sending, by the first radio access network device, an RRC resume message to the first terminal device, wherein the RRC resume message is used to resume an RRC connection of the first terminal device, and the identifiers of the one or more multicast sessions comprise the identifier of the multicast session that the first terminal device joins.

33. The method according to claim 32, wherein before the sending, by the first radio access network device, an RRC resume message to the first terminal device, the method further comprises:
determining a second paging message based on the first paging message, wherein the second paging message indicates that at least one multicast session is activated, and the at least one multicast session comprises the multicast session that the first terminal device joins; and
sending the second paging message.

34. The method according to claim 32 or 33, wherein before the sending, by the first radio access network device, an RRC resume message to the first terminal device, the method further comprises:
sending, by the first radio access network device, an RRC release message to the first terminal device, wherein the RRC release message indicates the first terminal device to enter the RRC inactive state or an RRC idle state; and
receiving, by the first radio access network device, an RRC resume request message from the first terminal device, wherein the RRC resume request message is used to request to enter an RRC connected state; or receiving, by the first radio access network device, an RRC setup request message from the first terminal device, wherein the RRC setup request message is used to request to set up an RRC connection.

35. The method according to any one of claims 32 to 34, wherein the receiving, by a first radio access network device, a first paging message comprises:
receiving, by the first radio access network device, the first paging message from a second radio access network device or a core network device, wherein the second radio access network device is a last serving radio access network device of the first terminal device in the RRC connected state.

36. The method according to any one of claims 32 to 35, wherein the obtaining, by the first radio access network device, a multicast-related context of the first terminal device comprises:
sending, by the first radio access network device, a first context request message to the second radio access network device, wherein the first context request message is used to request to obtain a context of the first terminal device to perform small data transmission; and
receiving, by the first radio access network device, a partial context of the first terminal device from the second radio access network device, wherein the partial context of the first terminal device comprises a small data transmission-related context and the multicast-related context, and the second radio access network device is the last serving radio access network device of the first terminal device in the RRC connected state.

37. The method according to claim 36, wherein the method further comprises:
sending, by the first radio access network device, a second context request message to the second radio access network device, wherein the second context request message is used to request to obtain a context of the first terminal device; and
receiving, by the first radio access network device, a terminal device context of the first terminal device from the second radio access network device.

38. The method according to any one of claims 32 to 35, wherein the obtaining, by the first radio access network device, a multicast-related context of the first terminal device comprises:
receiving, by the first radio access network device, a terminal device context of the first terminal device from the second radio access network device, wherein the terminal device context comprises the multicast-related context, and the second radio access network device is the last serving radio access network device of the first terminal device in the RRC connected state.

39. A wireless communication method, comprising:
determining, by a second radio access network device, whether identifiers of one or more activated multicast sessions comprise an identifier of a multicast session that a first terminal device joins; and
when the identifiers of the one or more activated multicast sessions comprise the identifier of the multicast session that the first terminal device joins, sending, by the second radio access network device, a terminal device context of the first terminal device to a first radio access network device, wherein
the first terminal device is in a radio resource control RRC inactive state and is in a process of small data transmission, the first radio access network device is a serving radio access network device of the first terminal device, and the second radio access network device is a last serving radio access network device of the first terminal device in an RRC connected state.

40. The method according to claim 39, wherein the terminal device context comprises a multicast-related context of the first terminal device.

41. The method according to claim 39 or 40, wherein before the sending, by the second radio access network device, a terminal device context of the first terminal device to a first radio access network device, the method further comprises:
receiving, by the second radio access network device, a context request message from the first radio access network device, wherein the context request message is used to request to obtain a context of the terminal device to perform small data transmission; and
sending, by the second radio access network device, a partial context of the first terminal device to the first radio access network device, wherein the partial context of the first terminal device comprises a small data transmission-related context.

42. The method according to any one of claims 39 to 41, wherein the method further comprises:
sending, by the second radio access network device, a first paging message to the first radio access network device, wherein the first paging message is used to notify that the one or more multicast sessions are activated.

43. The method according to claim 42, wherein the first paging message comprises the identifiers of the one or more multicast sessions.

44. A wireless communication method, comprising:
receiving, by a first terminal device, a second paging message from a first radio access network device, wherein the second paging message indicates that at least one multicast session is activated; and
sending, by the first terminal device, indication information to the first radio access network device, wherein the indication information comprises a non-small data transmission data indication and/or a multicast cause value, the at least one multicast session comprises a multicast session that the first terminal device joins, the first terminal device is in a radio resource control RRC inactive state and is in a process of small data transmission, and the first radio access network device is a serving radio access network device of the first terminal device.

45. The method according to claim 44, wherein after the sending, by the first terminal device, indication information to the first radio access network device, the method further comprises:
receiving, by the first terminal device, an RRC resume message from the first radio access network device, wherein the RRC resume message is used to resume an RRC connection of the first terminal device.

46. The method according to claim 45, wherein before the receiving, by the first terminal device, an RRC resume message from the first radio access network device, the method further comprises:
receiving, by the first terminal device, an RRC release message from the first radio access network device, wherein the RRC release message indicates the first terminal device to enter the RRC inactive state or an RRC idle state; and
sending, by the first terminal device, an RRC resume request message to the first radio access network device, wherein the RRC resume request message is used to request to enter an RRC connected state; or sending, by the first terminal device, an RRC setup request message to the first radio access network device, wherein the RRC setup request message is used to request to set up an RRC connection.

47. The method according to any one of claims 44 to 46, wherein the second paging message further indicates a terminal device in the RRC connected state to receive the at least one multicast session; or
the second paging message further indicates that the at least one multicast session is a multicast session received by a terminal device in the RRC connected state or an RRC non-connected state.

48. The method according to any one of claims 44 to 47, wherein
the multicast cause value indicates that the at least one multicast session comprises the multicast session that the first terminal device joins, or indicates that the multicast session that the first terminal device joins is activated, or indicates that the first terminal device enters the RRC connected state to receive multicast.

49. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement, through a logic circuit or by executing code instructions, the method according to any one of claims 23 to 31, the method according to any one of claims 32 to 38, the method according to any one of claims 39 to 43, or the method according to any one of claims 44 to 48.

50. A communication system, comprising a first radio access network device configured to implement the method according to any one of claims 23 to 31, and a first terminal device configured to implement the method according to any one of claims 44 to 48.

51. A communication system, comprising a first terminal device and a first radio access network device configured to implement the method according to any one of claims 32 to 38, wherein
the first terminal device is configured to receive an RRC resume message, wherein the RRC resume message is used to resume an RRC connection of the first terminal device.

52. A communication system, comprising a first radio access network device and a second radio access network device configured to implement the method according to any one of claims 39 to 43, wherein
the first radio access network device is configured to receive a terminal device context of a first terminal device.

53. A computer program product, comprising a computer program, wherein when the computer program is executed by a communication apparatus, the method according to any one of claims 1 to 5 is implemented, the method according to any one of claims 6 to 12 is implemented, the method according to claim 13 or 14 is implemented, the method according to any one of claims 23 to 31 is implemented, the method according to any one of claims 32 to 38 is implemented, the method according to any one of claims 39 to 43 is implemented, or the method according to any one of claims 44 to 48 is implemented.

54. A computer-readable storage medium, wherein the storage medium stores a computer program or instructions; and when the computer program or the instructions are executed by a communication apparatus, the method according to any one of claims 1 to 5 is implemented, the method according to any one of claims 6 to 12 is implemented, the method according to claim 13 or 14 is implemented, the method according to any one of claims 23 to 31 is implemented, the method according to any one of claims 32 to 38 is implemented, the method according to any one of claims 39 to 43 is implemented, or the method according to any one of claims 44 to 48 is implemented.
